# EUROPEAN PATENT SPECIFICATION

(11) **EP 3 796 247 B1**
(45) Date of publication and mention of the grant of the patent: **10.07.2024**
(21) Application number: 20193230.8
(22) Date of filing: 27.08.2020
(51) Int. Cl.: G06Q 40/00

(54) **SYSTEMS, METHODS, AND STORAGE MEDIA FOR PROVIDING INFORMATION RELATING TO SUSPICIOUS FINANCIAL ACTIVITIES TO INVESTIGATIVE AGENCIES**
SYSTEME, VERFAHREN UND SPEICHERMEDIUM ZUR BEREITSTELLUNG VON INFORMATIONEN IM ZUSAMMENHANG MIT VERDÄCHTIGEN FINANZIELLEN AKTIVITÄTEN AN ERMITTELNDE AGENTUREN
SYSTÈMES, PROCÉDÉS ET SUPPORTS DE STOCKAGE POUR FOURNIR DES INFORMATIONS ASSOCIÉES À DES ACTIVITÉS FINANCIÈRES SUSPECTES À DES ORGANISMES D'ENQUÊTE

(30) Priority: 17.09.2019 US 201916573188
(43) Date of publication of application: 24.03.2021
(73) Proprietor: Hummingbird RegTech Inc, Walnut, CA 91789 (US)
(72) Inventor: ROBINSON, Joseph Loree, Walnut, California 91789 (US); REISS, Jesse Lee, Walnut, California 91789 (US); GERARD, Ryan Thomas, Walnut, California 91789 (US); VAN BUSKIRK, Matthew, Walnut, California 91789 (US)
(74) Representative: Horler, Philip John

(56) References cited:
- US-A1- 2004 215 558
- US-A1- 2011 087 495
- US-A1- 2015 279 155
- US-A1- 2018 240 107
- US-A1- 2019 266 328
- US-B2- 8 751 399

## Description

### FIELD OF THE DISCLOSURE

The present disclosure relates to systems, methods, and storage media for providing information relating to suspicious financial activities to investigative agencies.

### BACKGROUND

"Money laundering", i.e. the process of concealing the origins of money obtained illegally by passing it through a complex sequence of banking transfers or commercial transactions, is a significant problem worldwide. Money laundering is often used by parties to account for the proceeds of their activities without gaining the attention of law enforcement agencies. Law enforcement agencies of many jurisdictions have set up sophisticated systems, and even international cooperative agreements, for detecting suspicious transactions or activities that may be indicative of money laundering or other financial fraud.

A Suspicious Activity Report (SAR) or Suspicious Transaction Report (STR) (referred to collectively as "SAR" herein) is a report made by a financial institution to the appropriate regulatory authorities about suspicious or potentially suspicious activity. In many jurisdictions, filing an SAR is mandatory when the financial institution sees certain specified triggering activities. The criteria to decide when a report must be made varies by jurisdiction, but generally is any financial transaction that does not make sense to the financial institution; is unusual for that particular client; or appears to be done only for the purpose of hiding or obfuscating another, separate transaction. The financial institution is ordinarily not permitted to inform the parties involved in the transaction that a SAR has been filed.

In the United States, SARs must be reported to the Financial Crimes Enforcement Network (FinCEN), an agency of the United States Department of the Treasury. The agency to which a report is required to be filed for a given country is typically part of the law enforcement or financial regulatory department of that country. SARs include detailed information about transactions that appear to be suspicious. The goal of SAR filings is to help the government identify individuals, groups and organizations involved in fraud like terrorist financing, money laundering, and other crimes, for further investigation.

For example, in the United States, FinCEN requires that an SAR be filed by a financial institution when the financial institution suspects insider abuse by an employee; violations of law aggregating over $5,000 where a subject can be identified; violations of law aggregating over $25,000 regardless of a potential subject; transactions aggregating $5,000 or more that involve potential money laundering or violations of the Bank Secrecy Act; computer intrusion; or when a financial institution knows that a customer is operating as an unlicensed money services business. In the US, each SAR generally must be filed within 30 days of the date of the initial determination for the necessity of filing the report. Further, the US Bank Secrecy Act specifies that each firm must maintain records of its SARs for a period of five years from the date of filing. Each country has different requirements. Also, each country has different requirements relating to the triggers for filing an SAR, the type of information that must be reported, the format of the information, the channels of communication, timing requirements and the like. Therefore, filing of an SAR in multiple countries, such as for international transactions, can be a very complicated matter of determining requirements, information, formatting, and timing for each country. Further, there is a level of subjectivity to the requirements of each report depending on the investigator and the specific facts. Therefore, additional information relating to the reported transactions is often required.

SARs are typically received by the investigating authorities as text documents and, for convenience of evaluation and confidentiality reasons, do not include the full extent of potential information relevant to the reported transactions that may be possessed by the financial institution that originated the SAR. Therefore, after reviewing the SAR, the investigative authorities often must contact the reporting financial institutions to obtain more information. Often this requires a judicial subpoena or the like before the information can be obtained. As a result, the information gathering portion of a typical investigation into money laundering or other financial fraud is cumbersome and can create delays.

Document US 2004/215558 A1 discloses a method of receiving financial transaction information to produce suspicious activity reports based on configuration information stored at a transaction processing device.

### SUMMARY

One aspect of the present disclosure relates to a computer-implemented method as set out in claim 1.

Another aspect of the present disclosure relates to a computer system as set out in claim

Yet another aspect of the present disclosure relates to a non-transient computer-readable storage medium as set out in claim 9.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

### BRIEF DESCRIPTION OF THE DRAWINGS

FIG. 1 is a schematic block diagram of a system architecture configured for providing information relating to suspicious financial activities to investigative agencies, in accordance with one or more implementations.
FIG. 2 is a flowchart of a method for providing information relating to suspicious financial activities to investigative agencies, in accordance with one or more implementations.
FIG. 3 is block diagram of a data validation process and a user interface (UI) for additional data entry.

### DETAILED DESCRIPTION

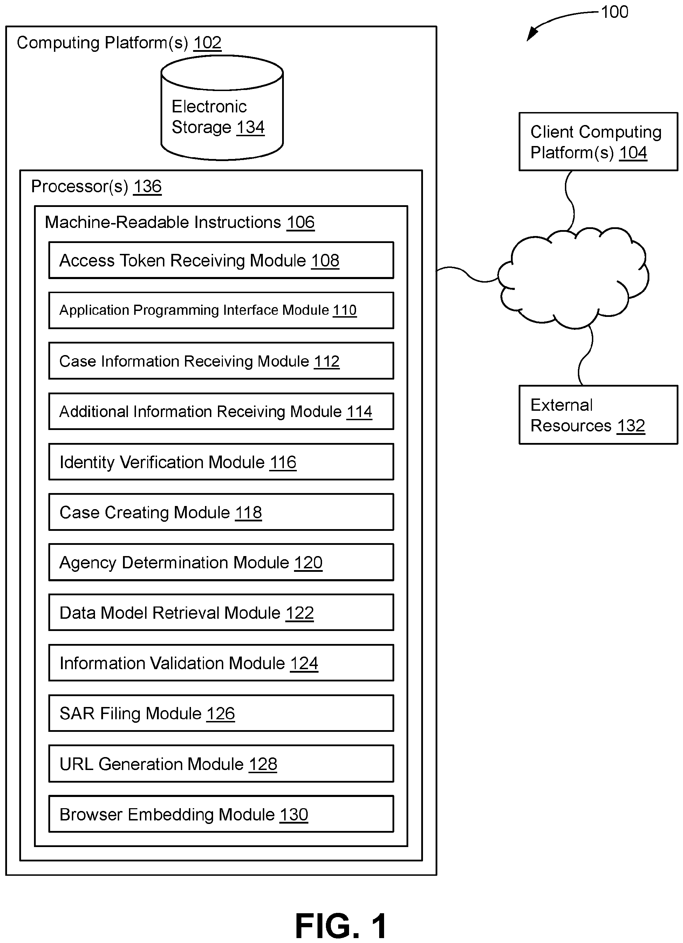

FIG. 1 illustrates a system 100 configured for providing information relating to suspicious financial activities to investigative agencies in accordance with one or more implementations. In some implementations, system 100 may include one or more servers 102. Server(s) 102 may be configured to communicate with one or more client computing platforms 104 according to a client/server architecture and/or other architectures. Client computing platform(s) 104 may be configured to communicate with other client computing platforms via server(s) 102 and/or according to a peer-to-peer architecture and/or other architectures. Users may access system 100 via client computing platform(s) 104. Client computing platforms may be associated with a financial institution, an investigative agency, or another party participating in the process of filing an SAR and the related investigation.

Server(s) 102 may be configured by machine-readable instructions 106 that are executed by processor(s) 136. Machine-readable instructions 106 may include one or more instruction modules. The instruction modules may include computer program modules. The instruction modules may include one or more of access token receiving module 108, application programming interface module 110, case information receiving module 112, additional information receiving module 114, identity verification module 116, case creating module 118, agency determination module 120, data model retrieval module 122, information validation module 124, SAR filing module 126, URL generation module 128, browser embedding module 130, and/or other instruction modules.

Access token receiving module 108 may be configured to receive a digital access token from a user, a financial institution for example, through a client computing platform 104 for example. The digital access token may identify the financial institution and include a token ID. Users of the system can register an account with Server(s) 102. An access token can be required to make requests to protected operations such as protected parts of the API's discussed below. When establishing and account, server(s) 102 can provide the user with an ID (client id) and a secret (c!ient_secret). The ID and secret can be used by the user to obtain an access_token. The access_token can be set to expire, within an hour for example, in which case a new token can be requested. Below is a code example that could be used to create the access token.

```
    $ cURL -X POST https://API.sandbox.hummingbird.co/oauth/token \
       -H "Content-Type: application/json" \
       -d @- «EOS
    {
     "grant_type": "client_credentials",
     "client_id": "$HUMMINGBIRD_CLIENT_ID",
     "client_secret": "$HUMMINGBIRD CLIENT SECRET"
    }
     EOS
     { "access_token": "<access-token>", ... }
```

Application programming interface module 110 may be configured to cause an application programming interface to be displayed on a computing device, such as client computing device 104 (corresponding to the user such as a financial) in response to receipt of the access token. In some implementations, an access token may be required to make requests to the API.

Case information receiving module 112 may be configured to receive case information, through the API, from the financial institution. The case information can include information indicating at least an individual, a financial institution (the reporting institution for example), and a information relating to at least one financial transaction that is to be the subject of a report of suspicious activity to one or more investigative agencies. A case includes a collection of entities and related information that can be sent to an investigative agency, such as FinCEN. The case entities represent things, such as bank accounts, payment cards and financial institutions.

Additional information receiving module 114 may be configured to receive additional information from the financial institution relating the case information and storing the additional information in a database in correspondence to the token. The additional information can be , stored in electronic storage 134 or external resources 132, for example. By way of non-limiting example, the additional information may include at least one of data visualizations, maps, analysis tools, case data supporting documents, and/or communication tools that enable personnel at the investigative agency to send and receive messages with a compliance professional who prepared the SAR. The external resources storing the additional information can include resources of the financial institution so that the additional information can be maintained securely until requested by an investigative agency as discussed below. Other requirements can apply to release of the additional information, such as a court order or other demonstration of need.

Identity verification module 116 may be configured to verify the identity of the financial institution based on the access token. Case creating module 118 may be configured to create a case data structure corresponding to the access token and the case information. The case information includes investigation information required by the investigative agency. Below is a code example that could be used to create a case data structure including an individual, an institution and a filing (triggering activity). These elements are required for a Suspicious Activity Report for FinCEN.

```
    $ cURL -X POST https://API.sandbox.hummingbird.co/cases \
       -H "Authorization: Bearer $HUMMINGBIRD_ACCESS_TOKEN" \
       -H "Content-Type: application/json" \
       -d @- «EOS
    {
     "case": {
      "name": "Test Case 1",
      "type": "filing",
      "individuals": [
       { "names": [ { "name": "Bilbo Baggins",
"first_name": "Bilbo", "last_name": "Baggins" }
    ] }
       ],
      "institutions": [
       {
        "name": "Bank of the Shire",
        "institution_type": "DEPOSITORY_INSTITUTION",
        "primary_federal_regulator": "FDIC",
        "tin": "123123123",
        "tin_type": "EIN" } ],
      "filings": [
       {
        "filing_type": "INITIAL",
        "jurisdiction": "FINCEN",
        "activities": [
         "SOURCE_OF_FUNDS"
        ],
        "activity_started_at": "2018-06-10T09:13:34Z",
        "activity_ended_at": "2018-10-10T03:14:15Z",
        "narrative": "Bilbo appears to have quickly accumulated significant wealth."
       }
      ]
     }
    }
    EOS
    { "case": { "token": "<case-token>", ... } }
```

Agency determination module 120 may be configured to determine one or more relevant investigative agencies for receiving a report based on the case information. For example, the case information can include residential addresses and/or citizenship information of parties which will be automatically parsed to indicate jurisdiction of specific investigative agencies and thus trigger an SAR to be filed in that jurisdction. The determination can be based on a selection of jurisdictions made by the financial institution.

Data model retrieval module 122 may be configured to retrieve a data model corresponding to each relevant investigative agency. Each data model may indicate the information required by the corresponding investigative agency for a SAR based on the case information.

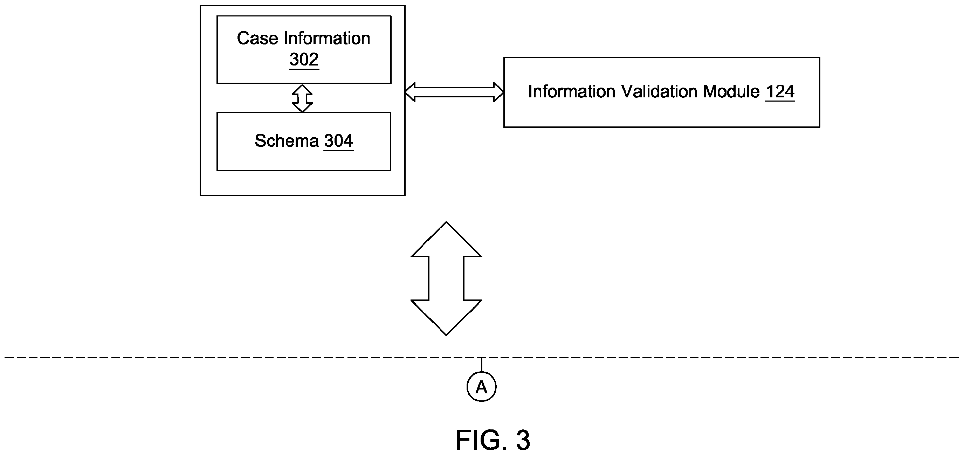

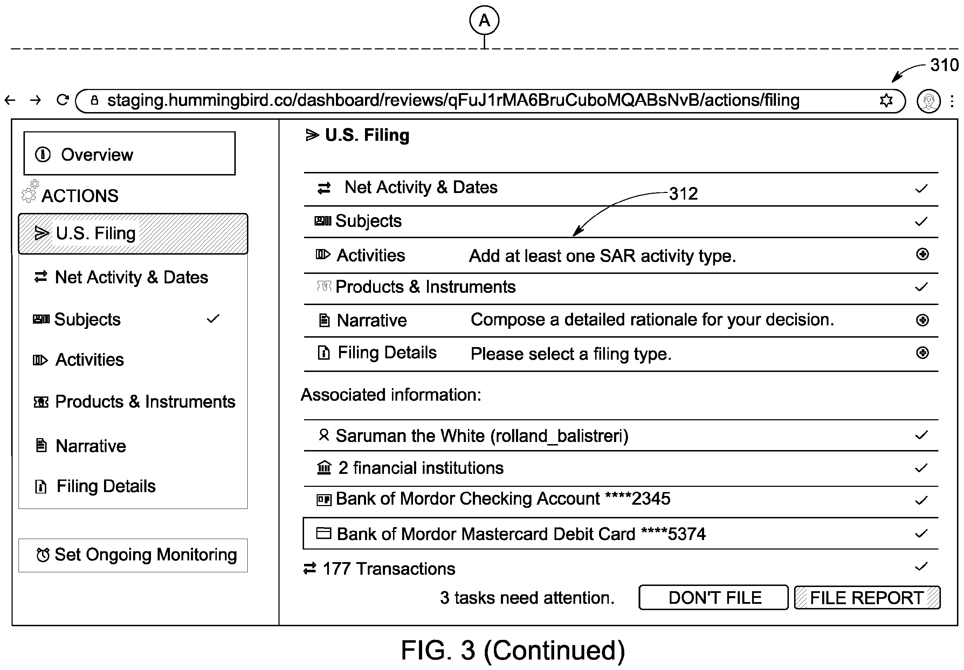

Information validation module 124 may be configured to validate that all essential information required by each of the relevant investigative agencies is included in the case information based on each retrieved data model. All information is requested and provided based on an application programming interface (API), which is described in detail below. For example, each data model may specify required and/or optional data. As shown in FIG. 3, Information validation module 124 can compare the case information 302 and related metadata to a schema 304 corresponding to the data model to validate that all required information is included. In some implementations, by way of non-limiting example, each retrieved schema/data model may be based on reporting specifications of the corresponding investigative agency. A validation issues message 312 can be returned, through UI 310, when validation cannot be completed due to missing or incorrect information. Corrected information can be received from the financial institution and the validation can be attempted on the corrected information. The system can run validations against the case with the given token before filing. This can be used as a pre-filing test endpoint to verify that the filing has no known validation errors. Also, an error can be returned if the case does not exist, or if there are other informalities. If all validations are run without error, a success status is returned. As shown in FIG. 3, an ontology for an SAR of a selected jurisdiction can be presented to the user as user interface 310 to prompt the user to enter the required information and can be compared to entered information to indicate additional required information.

SAR filing module 126 may be configured to file a SAR based on the case information in each of the one or more relevant jurisdictions in correspondence with the access token. URL Generation Module 128 can generate and insert a unique system-hosted URL into the SAR filing. URL generation module 128 may be configured to include a secure URL, or other link, in at least one of the SARs. The Secure URL may be an HTTPS URL and use the Secure Sockets Layer (SSL) Protocol. The secure URL may provide the investigative agency with access to the additional information corresponding to the case information. By way of non-limiting example, each secure URL may have controls that include at least one of authentication that the user of the URL is personnel at the investigative agency, a time-based expiration, and/or access permissions to only desired IP addresses. As noted above, other requirements can be applied to use of the secure URL. Each secure URL may be unique to the corresponding SAR and link to additional information based on the requirements of the specific jurisdiction. Various known mechanisms of authenticating that the visitor to the URL is a verified law enforcement agent with permission to access the case data can be used. An expiration date and time can be associated with the secure URL. Further, filtering can be used to enable or prevent IP address ranges from accessing the secure URLs.

Browser embedding module 130 may be configured to embed a link to a secure browser in in the SAR workflow or other message and can be used by investigators at the financial institution or transmitted to at least one of the investigative agencies in connection with SAR for use by the investigative agency. The secure browser may include preset search strategies determined based on the case information. The preset searches can be presented as a button or other UI element in the browser. The preset searches can be configured for each SAR by parsing the information to be reported based on the schema of the jurisdiction and preferences by the submitting party. For example, searches for a US SAR may be focused countries known to be havens for money laundering by US citizens. Examples of such preconfigured searches include:
- Search Google with the following query: "[Subject first name] [Subject last name] scam"
- Search Reddit for the following username: "[subject email address username]"
- Ability to search "DarkWeb" sites, also known as TOR sites.

The secure browser may be configured to run on a virtual machine in a client computing platform 104, or another device, controlled by the investigative agency. The virtual machine permits the investigative agency to conduct auditable internet searches that will not later be associated with computing devices of investigative agency. The virtual machine is also a security feature. If a site containing malware or other malicious code is visited using the embedded browser, network safety will not be affected.

Suspicious activity and various financial crime investigations typically include research on the subject(s) of the investigation. This research may include searching for the subject(s) on the public Internet and increasingly on the DarkWeb. Investigators conduct these searches to find the subject(s) profiles on social media networks, activity on forums, message boards, and other types of services. Regulated financial institutions are expected to conduct thorough investigations into unusual, suspicious, and confirmed fraudulent behaviors among their customers. Internet research (including DarkWeb sites) can be a critical component of these investigations. As such, it is important that the financial institution be able to demonstrate that the investigator did conduct the Internet research as part of the investigation.

However, Internet research can be difficult due to characteristics inherent in the modern day worldwide web. For example, search engine providers frequently incorporate personalization algorithms into search result selection and filtering. As a result, the Investigator's search results may be biased by their personal search behaviors and history. Researching subjects on the DarkWeb can be a security risk to the financial institution if proper precautions are not taken. Secure Browser technology can be leveraged to provide secure, safe access to DarkWeb sites. For example, a browser can utilize secure methods of network communication such as DNSSec and DNSCrypt, for example. Further HTTPS and SPDY can be used with digitally signed public key certificates or Extended Validation Certificates. The implementations can embed a secure browser directly into the case workflow. Research conducted in this browser can recorded for future audit, and search results may be added to the case information and/or the additional information.

The browser technology provided for this research avoids bias from personalization algorithms. Additionally, the browser is securely separated from the financial institutions network so that DarkWeb sites may be visited for research purposes. The secure browser can include be an embedded, functionality-controlled Internet and DarkWeb browser provided within the context of a financial compliance case management and workflow service.

The secure browser can run on a virtual machine (VM) with real-time interaction for the investigator. This feature enables the investigator to search the DarkWeb and other risky websites without risk of infecting the financial institution's computers or network with viruses or malware. The ability to screenshot the browser and add the images to the investigation data can be included. Further, the ability to record, view, and share Internet research sessions that have been conducted as part of an investigation can be included.

IP addresses can be purged from the secure browser after searching/browsing sessions of the session. Other tracking data, such as cookies and the like, can also be cleared to obfuscate the identity of the searcher. Further, the entire VM can be spun down to hide the identity of the searcher.

In some implementations, server(s) 102, client computing platform(s) 104, and/or external resources 132 may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which server(s) 102, client computing platform(s) 104, and/or external resources 132 may be operatively linked via some other communication media.

A given client computing platform 104 may include one or more processors configured to execute computer program modules. The computer program modules may be configured to enable an expert or user associated with the given client computing platform 104 to interface with system 100 and/or external resources 132, and/or provide other functionality attributed herein to client computing platform(s) 104. By way of non-limiting example, the given client computing platform 104 may include one or more of a desktop computer, a laptop computer, a handheld computer, a tablet computing platform, a NetBook, a Smartphone, a gaming console, and/or other computing platforms.

External resources 132 may include sources of information outside of system 100, external entities participating with system 100, and/or other resources. In some implementations, some or all of the functionality attributed herein to external resources 132 may be provided by resources included in system 100.

Server(s) 102 may include electronic storage 134, one or more processors 136, and/or other components. Server(s) 102 may include communication lines, or ports to enable the exchange of information with a network and/or other computing platforms. Illustration of server(s) 102 in FIG. 1 is not intended to be limiting. Server(s) 102 may include a plurality of hardware, software, and/or firmware components operating together to provide the functionality attributed herein to server(s) 102. For example, server(s) 102 may be implemented by a cloud of computing platforms operating together as server(s) 102.

Electronic storage 134 may comprise non-transitory storage media that electronically stores information. The electronic storage media of electronic storage 134 may include one or both of system storage that is provided integrally (i.e., substantially non-removable) with server(s) 102 and/or removable storage that is removably connectable to server(s) 102 via, for example, a port (e.g., a USB port, a firewire port, etc.) or a drive (e.g., a disk drive, etc.). Electronic storage 134 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 134 may include one or more virtual storage resources (e.g., cloud storage, a virtual private network, and/or other virtual storage resources). Electronic storage 134 may store software algorithms, information determined by processor(s) 136, information received from server(s) 102, information received from client computing platform(s) 104, and/or other information that enables server(s) 102 to function as described herein.

Processor(s) 136 may be configured to provide information processing capabilities in server(s) 102. As such, processor(s) 136 may include one or more of a digital processor, an analog processor, a digital circuit designed to process information, an analog circuit designed to process information, a state machine, and/or other mechanisms for electronically processing information. Although processor(s) 136 is shown in FIG. 1 as a single entity, this is for illustrative purposes only. In some implementations, processor(s) 136 may include a plurality of processing units. These processing units may be physically located within the same device, or processor(s) 136 may represent processing functionality of a plurality of devices operating in coordination. Processor(s) 136 may be configured to execute modules 108, 110, 112, 114, 116, 118, 120, 122, 124, 126, 128, and/or 130, and/or other modules. Processor(s) 136 may be configured to execute modules 108, 110, 112, 114, 116, 118, 120, 122, 124, 126, 128, and/or 130, and/or other modules by software; hardware; firmware; some combination of software, hardware, and/or firmware; and/or other mechanisms for configuring processing capabilities on processor(s) 136. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although modules 108, 110, 112, 114, 116, 118, 120, 122, 124, 126, 128, and/or 130 are illustrated in FIG. 1 as being implemented within a single processing unit, in implementations in which processor(s) 136 includes multiple processing units, one or more of modules 108, 110, 112, 114, 116, 118, 120, 122, 124, 126, 128, and/or 130 may be implemented remotely from the other modules. The description of the functionality provided by the different modules 108, 110, 112, 114, 116, 118, 120, 122, 124, 126, 128, and/or 130 described below is for illustrative purposes, and is not intended to be limiting, as any of modules 108, 110, 112, 114, 116, 118, 120, 122, 124, 126, 128, and/or 130 may provide more or less functionality than is described. For example, one or more of modules 108, 110, 112, 114, 116, 118, 120, 122, 124, 126, 128, and/or 130 may be eliminated, and some or all of its functionality may be provided by other ones of modules 108, 110, 112, 114, 116, 118, 120, 122, 124, 126, 128, and/or 130. As another example, processor(s) 136 may be configured to execute one or more additional modules that may perform some or all of the functionality attributed below to one of modules 108, 110, 112, 114, 116, 118, 120, 122, 124, 126, 128, and/or 130.

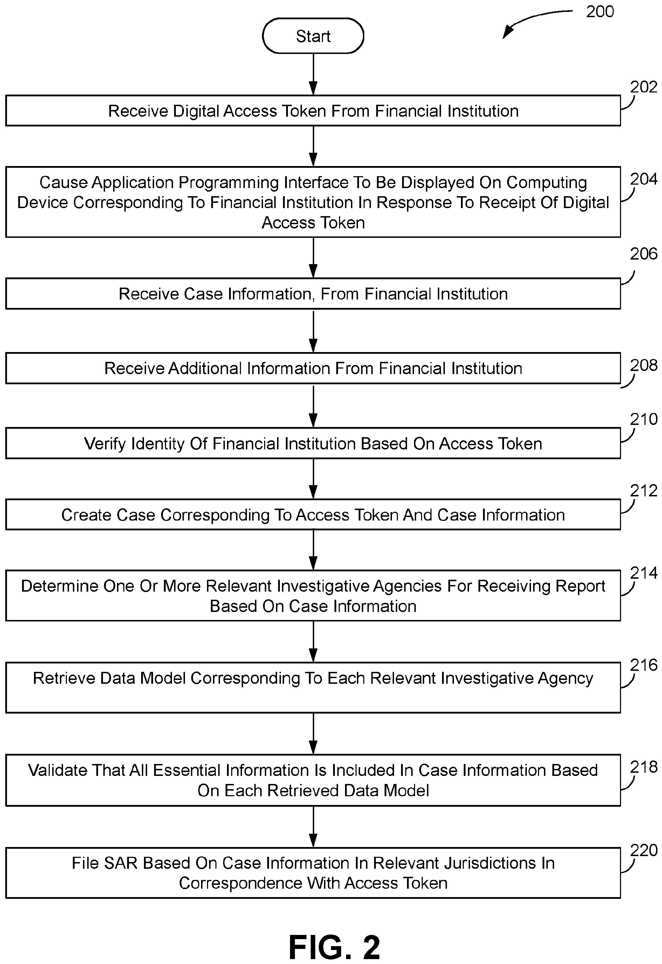

FIG. 2 illustrates a method 200 for providing information relating to suspicious financial activities to investigative agencies, in accordance with one or more implementations. The operations of method 200 presented below are intended to be illustrative. In some implementations, method 200 may be accomplished with one or more additional operations not described, and/or without one or more of the operations discussed. Additionally, the order in which the operations of method 200 are illustrated in FIG. 2 and described below is not intended to be limiting.

In some implementations, method 200 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of method 200 in response to instructions stored electronically on an electronic storage medium. The one or more processing devices may include one or more devices configured through hardware, firmware, and/or software to be specifically designed for execution of one or more of the operations of method 200.

An operation 202 may include receiving a digital access token from a financial institution. The digital access token may identify the financial institution and including a token ID. Operation 202 may be performed by one or more hardware processors configured by machine-readable instructions including a module that is the same as or similar to access token receiving module 108, in accordance with one or more implementations.

An operation 204 may include causing an application programming interface to be displayed on a computing device corresponding to the financial institution in response to receipt of the digital access token. Operation 204 may be performed by one or more hardware processors configured by machine-readable instructions including a module that is the same as or similar to application programming interface causing module 110.

An operation 206 may include receiving case information, through the API, from the financial institution, the case information including information indicating at least an individual, an institution, and information relating to at least one financial transaction that is to be the subject of a report of suspicious activity to one or more investigative agencies. Operation 206 may be performed by one or more hardware processors configured by machine-readable instructions including a module that is the same as or similar to case information receiving module 112.

An operation 208 may include receiving additional information from the financial institution relating the case information and storing the additional information in a database in correspondence to the token. Operation 208 may be performed by one or more hardware processors configured by machine-readable instructions including a module that is the same as or similar to information receiving module 114.

An operation 210 may include verifying the identity of the financial institution based on the access token. Operation 210 may be performed by one or more hardware processors configured by machine-readable instructions including a module that is the same as or similar to identity verification module 116, in accordance with one or more implementations.

An operation 212 may include creating a case corresponding to the access token and the case information. Operation 212 may be performed by one or more hardware processors configured by machine-readable instructions including a module that is the same as or similar to case creating module 118.

An operation 214 may include determining one or more relevant investigative agencies for receiving a report based on the case information. Operation 214 may be performed by one or more hardware processors configured by machine-readable instructions including a module that is the same as or similar to agency determination module 120.

An operation 216 may include retrieving a data model corresponding to each relevant investigative agency. Each data model may indicate the information required by the corresponding investigative agency for a suspicious activity report SAR based on the case information. Operation 216 may be performed by one or more hardware processors configured by machine-readable instructions including a module that is the same as or similar to data model retrieval module 122.

An operation 218 may include validating that all essential information required by each of the relevant investigative agencies is included in the case information based on each retrieved data model. Operation 218 may be performed by one or more hardware processors configured by machine-readable instructions including a module that is the same as or similar to information validation module 124.

An operation 220 may include filing a SAR based on the case information in each of the one or more relevant jurisdictions in correspondence with the access token. Operation 220 may be performed by one or more hardware processors configured by machine-readable instructions including a module that is the same as or similar to SAR filing module 126.

The API can use REST-like semantics and JSON formatting. Therefore, standard HTTP response codes and verbs can be used. Authorization can be achieved using OAuth 2.0. A Client ID and Client Secret can be generated and securely passed to a user. For all objects, the above-noted token can be used as a primary identifier for the resource. In addition, all objects can be annotated with a user internal ID, which may be useful for cross-referencing between objects. X-HB-API-VERSION header values can be used for API versioning. If the value isn't present, the system can default to the latest version of the API. The API versions can be designated by simple positive integers, starting at 1. For added security, IP whitelisting can be used such that API authorization and API calls for can only originate from specific IP addresses and/or ranges associated with a specific user.

As noted above, the implementations provide a common API and underlying schemas that facilitate recessing the information and filing SARs. The schemas include all data required for creating cases, filing SARs and all other processing. An example set of schemas is attached as an Appendix and constitutes part of this specification. The possible values for activities within a filing fall under various categories defined by the SAR specification of each jurisdiction. The values on the left in the tables below are descriptions from the various SARs, and the values on the right are corresponding variable names in an example of the API.

### Structuring

| **SAR Description** | **API Value** |
|---|---|
| Alters or cancels transaction to avoid BSA recordkeeping requirement | ALTERS_TO_AVOID_BSA |
| Alters or cancels transaction to avoid CTR requirement | ALTERS_TO_AVOID_CTR |
| Cancels transaction to avoid BSA recordkeeping requirements | CANCELS_TO_AVOID_BSA |
| Transaction(s) below BSA recordkeeping threshold | MULTIPLE_BELOW_BSA |
| Transaction(s) below CTR threshold | MULTIPLE_BELOW_CTR |
| Suspicious inquiry by customer regarding BSA reporting or recordkeeping requirements | INQUIRY_REGARDING_BSA |

### Terrorist Financing

| **SAR Description** | **API Value** |
|---|---|
| Known or suspected terrorist/terrorist organization | KNOWN_OR_SUSPECTED_ORGANIZATION |

### Fraud

| **SAR Description** | **API Value** |
|---|---|
| ACH | ACH |
| Business loan | BUSINESS_LOAN |
| Check | CHECK |
| Consumer Loan | CONSUMER_LOAN |
| Credit/Debit Card | CREDIT_OR_DEBIT_CARD |
| Healthcase/Public or private health insurance | HEALTHCARE |
| Mail | MAIL |
| Mass-marketing | MASS_MARKETING |
| Ponzi Scheme | PONZI_SCHEME |
| Pyramid scheme | PYRAMID_SCHEME |
| Securities fraud | SECURITIES |
| Wire | WIRE |

### Casinos

| **SAR Description** | **API Value** |
|---|---|
| Inquiry about end of business day | INQUIRY_ABOUT_END_OF_BUSINESS_DAY |
| Minimal gaming with large transactions | MINIMAL_GAMING_LARGE_TRANSACTIONS |
| Chip walking | CHIP_WALKING |
| Transfers | TRANSFERS |
| Suspicious use of counter checks or markers | USE_COUNTER_CHECKS_OR_MARKERS |

### Money Laundering

| **SAR Description** | **API Value** |
|---|---|
| Exchanges small bills for large bills or vice versa | EXCHANGE_BILL_SIZE |
| Funnel account | FUNNEL_ACCOUNT |
| Suspicious concerning the physical condition of funds | PHYSICAL_CONDITION |
| Suspicious concerning the source of funds | SOURCE_OF_FUNDS |
| Suspicious designation of beneficiaries, assignees or joint owners | BENEFICIARIES_ASSIGNEES_OWNERS |
| Suspicious EFT/wire transfers | EFT_OR_WIRE |
| Suspicious exchange of currencies | EXCHANGE_OF_CURRENCIES |
| Suspicious receipt of government payments/benefits | RECEIPT_OF_GOVT_BENEFITS |
| Suspicious use of multiple accounts | USE_OF_MULTIPLE_ACCOUNTS |
| Suspicious use of noncash monetary instruments | USE_OF_NONCASH_INSTRUMENTS |
| Suspicious use of third-party transactors (straw-man) | USE_OF_THIRD_PARTY_TRANSACTOR |
| Trade Based Money Laundering/Black Market Peso Exchange | TRADE_BASED_LAUNDERING |
| Transaction out of pattern for customer(s) | TRANSACTION_OUT_OF_PATTERN |

### Identification and Documentation

| SAR **Description** | **API Value** |
|---|---|
| Changes spelling or arrangement of name | CHANGE_NAME |
| Multiple individuals with same or similar identities | SIMILAR_IDENTITIES |
| Provided questionable or false documentation | QUESTIONABLE_DOCUMENTATION |
| Provided questionable or false identification | QUESTIONABLE_IDENTIFICATION |
| Refused or avoided request for documentation | AVOIDED_DOCUMENTATION_REQUEST |
| Single individual with multiple identities | MULTIPLE_IDENTITIES |

### Other Activities

| **SAR Description** | **API Value** |
|---|---|
| Account takeover | ACCOUNT_TAKEOVER |
| Bribery or gratuity | BRIBERY_OR_GRATUITY |
| Counterfeit Instruments | COUNTERFEIT_INSTRUMENTS |
| Elder financial exploitation | ELDER_EXPLOITATION |
| Embezzlement/theft/disappearance of funds | EMBEZZLEMENT |
| Forgeries | FORGERIES |
| Human smuggling | HUMAN_SMUGGLING |
| Human trafficking | HUMAN_TRAFFICKING |
| Identity theft | IDENTITY_THEFT |
| Little or no concern for product performance penalites, fees, or tax consequences | NO_CONCERN_FOR_PERFORMANCE |
| Misuse of free period | MISUSE_OF_FREE_PERIOD |
| Misuse of position or self-dealing | MISUSE_OF_POSITION |
| Suspected public/private corruption (domestic) | DOMESTIC_PUBLIC_PRIVATE_CORRUPTION |
| Suspected public/private corruption (foreign) | FOREIGN_PUBLIC_PRIVATE CORRUPTION |
| Suspicious use of informal value transfer system | INFORMAL_VALUE_TRANSFER |
| Suspicious use of multiple locations | MULTIPLE_TRANSACTION_LOCATIONS |
| Transaction with no apparent economic, business, or lawful purpose | NO_APPARENT_PURPOSE |
| Transaction(s) involving foreign high risk jurisdiction | HIGH_RISK_JURISDICTION |
| Two or more individuals working together | MULTIPLE_INDIVIDUALS |
| Electronic intrusion | ELECTRONIC_INTRUSION |
| Unlicensed or unregistered MSB | UNLlCENSED_MSB |

### Insurance

| **SAR Description** | **API Value** |
|---|---|
| Excessive insurance | EXCESSIVE_INSURANCE |
| Excessive or unusal cash borrowing against policy/annuity | EXCESSIBLE_CASH_BORROWING |
| Proceeds sent to unrelated third party | UNRELATED_THIRD_PARTY |
| Suspicious life settlement sales insurance (e.g., STOLI's, Viaticals) | LlFE_SETTLEMENT_SALES |
| Suspicious termination of policy or contract | TERMINATION_OF_POLICY |
| Unclear or no insurable interest | UNCLEAR_INSURABLE_INTEREST |

### Securities and Futures

| **SAR Description** | **API Value** |
|---|---|
| Insider trading | INSIDER_TRADING |
| Market manipulation | MARKET_MANIPULATION |
| Misappropriation | MISAPPROPRIATION |
| Unauthorized pooling | UNAUTHORIZED_POOLING |
| Wash trading | WASH_TRADING |

### Mortgage Fraud

| **SAR Description** | **API Value** |
|---|---|
| Appraisal fraud | APPRAISAL_FRAUD |
| Application fraud | APPLICATION_FRAUD |
| Foreclosure/Short sale fraud | FORECLOSURE_FRAUD |
| Loan Modification fraud | LOAN_MODIFICATION_FRAUD |
| Origination fraud | REVERSE_MORTGAGE_FRAUD |

### Product Types

The possible values for product types within a Filing follow the values you see on the SAR itself:

| **SAR Description** | **API Value** |
|---|---|
| Bonds/Notes | BONDS_NOTES |
| Commercial mortgage | COMMERCIAL_MORTGAGE |
| Commercial paper | COMMERCIAL_PAPER |
| Credit card | CREDIT_CARD |
| Debit card | DEBIT_CARD |
| Forex transactions | FOREX_TRANSACTIONS |
| Futures/Options on futures | FUTURES_OR_FUTURES_OPTIONS |
| Hedge fund | HEDGE_FUND |
| Home equity loan | HOME_EQUITY_LOAN |
| Home equity line of credit | HELOC |
| Insurance/Annuity products | INSURANCE_OR_ANNUITY |
| Mutual fund | MUTUAL_FUND |
| Options on securities | OPTIONS_ON_SECURITIES |
| Microcap securities | MICROCAP_SECURITIES |
| Prepaid access | PREPAID_ACCESS |
| Residential mortgage | RESIDENTIAL_MORTGAGE |
| Security futures products | SECURITY_FUTURES |
| Stocks | STOCKS |
| Swap, hybrid, or other derivative | OTHER_DERIVATIVES |

### Instruments

The possible values for instruments within a Filing follow the values you see on the SAR itself:

| **SAR Description** | **API Value** |
|---|---|
| Bank/Cashier's check | BANK_OR_CASHIERS_CHECK |
| Foreign currency | FOREIGN_CURRENCY |
| Funds transfer | FUNDS_TRANSFER |
| Gaming instruments | GAMING_INSTRUMENTS |
| Government payment | GOVERNMENT_PAYMENT |
| Money orders | MONEY_ORDERS |
| Personal/Business check | PERSONAL_OR_BUSINESS_CHECK |
| Travelers checks | TRAVELERS_CHECKS |
| U.S. Currency | US_CURRENCY |

### institution Types

The possible values for institution type within an Institution follow the values you see on the SAR itself:

### API Value

CASINO_OR_CARD_CLUB
DEPOSITORY_INSTITUTION
INSURANCE_COMPANY
MSB
SECURITIES_OR_FUTURES
LOAN_OR_FINANCE_COMPANY
HOUSING_GSE

### APPENDIX:

### Schemas

### 1. Activities Other

```
 {
    "category": "OTHER_ACTIVITIES",
    "value": "string"
 }
```

### PROPERTIES

| Name | Type | Required | Restrictions | Description |
|---|---|---|---|---|
| category | string | false | none | The category of activity to report, matches to the jurisdiction filing. |
| value | string | false | none | Actual text of activity to report. |

### ENUMERATED VALUES

| Property | Value |
|---|---|
| category | STRUCTURING |
| category | TERRORIST_FINANCING |
| category | FRAUD |
| category | GAMING_ACTIVITIES |
| category | MONEY_LAUNDERING |
| category | IDENTIFICATION_AND_DOCUMENTATION |
| category | OTHER_ACTIVITIES |
| category | INSURANCE |
| category | SECURITIES_FUTURES |
| category | MORTGAGE_FRAUD |

### 2. Address

```
 {
    "address_line_1": "A hole in the ground",
    "address_line_2": "Sackville-Bagginses",
    "city": "Bag End",
    "state": "ME",
    "country": "US",
    "postal code": "12345"
 {
```

### PROPERTIES

| Name | Type | Required | Restrictions | Description |
|---|---|---|---|---|
| address_line_1 | string | false | none | none |
| address_line_2 | string | false | none | none |
| city | string | false | none | none |
| state | string | false | none | none |
| country | string | false | none | none |
| postal_code | string | false | none | none |

### 3. Alert

```
 {
 "token": "<alert-token>",
 "id": "ALERT-123ABC",
 "triggered_at": "2019-07-23120:17:06Z",
 "rule": "Weekly Average Transaction Size",
 "references": [
    {
          "type": "individual",
          "id": "FI-123ABC"
    }
  ],
          "comments": "Three transactions over $800 were seen within a single week.",
          "other-info": [
    {
          "label": "House",
          "value": "Elrond"
    }
  ]
 }
```

### PROPERTIES

| Name | Type | Required | Restrictions | Description |
|---|---|---|---|---|
| token | string | false | none | Unique identifier created by Hummingbird for the resource. Required when fetching, but not when creating. |
| id | string | false | none | Your id for this alert. |
| triggered_at | string(date-time) | false | none | When was this alert triggered? |
| rule | string | false | none | What rule was used to trigger this alert? |
| references | [Reference] | false | none | What data is associated with this alert? E.g. Which subjects and transactions are associated with this alert? When creating alerts, alert references will be used to aggregate alerts into a single case. Within the UI, alert references are used to tie alerts to the associated data, |
| comments | string | false | none | Any additional comments associated with this alert. |
| other_info | [GenericKeyValuePair] | false | none | List of generic key/value pairs to add to the alert. |

### 4. AlertRequest

```
 {
   "alerts": [
    {
          "token": "<alert-token>",
          "id": "ALERT-123ABC",
          "triggered_at": "2019-07-23120:17:06Z",
          "rule": "Weekly Average Transaction Size",
          "references": [],
          "comments": "Three transactions over $800 were seen within a single week.",
          "other_info": [], }
          ],
          "workglow": "triage",
          "data": {
    "bank_accounts": [
          {}
    ],
    "businesses": [
          {}
    ],
    "cypto_addresses": [
          {}
    ],
    "devices": [
          {} ],
    "individuals": [
          {} ],
    "institutions": [
          {} ],
    "payment_cards": [
          {}
    ],
    "products": [
          {}
    ],
    "transactions": [
          {}
    ],
   }
 }
```

### PROPERTIES

| Name | Type | Required | Restrictions | Description |
|---|---|---|---|---|
| alerts | [Alert] | false | none | A list of alert details. Send multiple alerts if alerts can be grouped, e.g. if a set of transactions triggered multiple rules. |
| workflow | string | false | none | A string descriptor to indicate which workflow to initiate. If empty, will default to whichever workflow is configured as an initial workflow for the organization, |
| data | CaseData | false | none | Additional information to add into the case including subject PII, accounts, transaction histories, etc. |

### 5. BankAccount

```
 {
   "token": "<bank-account-token>",
   "id": "BA-123ABC",
   "account_holder_id": "ID-123ABC",
   "institution_id": "IN-123ABC",
   "fingerprint": "bc3c3aee9c4a32fc4c81b5a28c6d481d",
   "routing_number": "021001021",
   "account_number": "002575960020289900212369",
   "account_type": "DEPOSITORY",
   "account_subtype": "CHECKING",
   "country": "US",
   "state": "CA",
   "opened_at": "2019-07-23T20:17:06Z",
   "closed_at": "2019-07-23T20:17:06Z",
   "other-info": [
        {
          "label": "House",
          "value": "Elrond"
        }
   ]
 }
```

*A Bank Account can be added for investigating links between accounts.*

### PROPERTIES

| Name | Type | Required | Restrictions | Description |
|---|---|---|---|---|
| token | string | false | none | Unique identifier created by Hummingbird for the resource. Required when fetching, but not when creating, |
| id | string | false | none | Your id for this bank account. |
| account_holder_id | string | false | none | The account holder for this account. The ID is the one provided by you. |
| institution_id | string | false | none | The institution holding the account. The ID is the one provided by you. |
| fingerprint | string | false | none | Uniquely identify this account in a way that is consistent across cases, |
| routing_number | string | false | none | Routing number of bank account. |
| account_number | string | false | none | Account number of bank account. |
| account_type | string | false | none | Type of account. |
| account_subtype | string | false | none | Subtype of account. |
| country | string | false | none | Country where account is located. |
| state | string | false | none | State where account is located. |
| opened_at | string(date-time) | false | none | Date the account was opened, |
| closed_at | string(date-time) | false | none | Date the account was closed. |
| other_info | [GenericKeyValuePair] | false | none | List of generic key/value pairs. |

### ENUMERATED VALUES

| Property | Value |
|---|---|
| account_type | DEPOSITORY |
| account_type | LOAN |
| account_type | MORTGAGE |
| account_type | BROKERAGE |
| account_type | OTHER |
| account_type | UNKNOWN |
| account_subtype | CHECKING |
| account_subtype | SAVINGS |
| account_subtype | MONEY_MARKET |
| account_subtype | AUTO_LOAN |
| account_subtype | HOME_LOAN |
| account_subtype | HOME_EQUITY_LOAN |
| account_subtype | INSTALLMENT_LOAN |
| account_subtype | MORTGAGE_LOAN |
| account_subtype | HOME_MORTGAGE |
| account_subtype | BROKERAGE |

| Property | Value |
|---|---|
| account_subtype | CASH_MANAGEMENT |
| account_subtype | IRA |
| account_subtype | CD |
| account_subtype | CERTIFICATE_OF_DEPOSIT |
| account_subtype | MUTUAL_FUND |
| account_subtype | OTHER |
| account_subtype | UNKNOWN |

### 6. Branch

```
 {
   "token": "<branch-token>",
   "id": "BR-123ABC",
   "address": {
     "address_line_1": "A hole in the ground",
     "address_line_2": "Sackville-Baginses",
     "city": "Bag End",
     "state": "ME",
     "country": "US",
     "postal_code": "12345"
   },
   "rssd_number": "952847",
   "role_in_transaction": "SELLING_LOCATION",
   "other-info": [
       {
          "label": "House",
          "value": "Elrond",
       }
   ]
 }
```

*A branch represents a branch of a financial institution involved in a case*.

### PROPERTIES

| Name | Type | Required | Restrictions | Description |
|---|---|---|---|---|
| token | string | false | none | Unique identifier created by Hummingbird for the resource. Required when fetching, but not when creating, |
| id | string | false | none | Your id for this branch, |
| address | Address | false | none | none |
| rssd_number | string | false | none | none |
| role_in_transaction | string | false | none | none |
| other_info | [GenericKeyValuePair] | false | none | List of generic key/value pairs. |

### ENUMERATED VALUES

| Property | Value |
|---|---|
| role_in_transaction | SELLING_LOCATION |

| Property | Value |
|---|---|
| role_in_transaction | PAYING_LOCATION |
| role_in_transaction | BOTH |

### 7. Business

```
 {
 "token": "<business-token>",
 "id": "BS-123-ABC",
 "legal_names": [
    "Inn of the Prancing Pony",
    "Favorite Bree Inn of Aragorn"
    ], "dba names": [
    "Green Dragon Inn",
    "Golden Perch Inn"
    ],
    "tins": [
    {
          "number": "string",
          "type": "EIN" } ],
          "role_in_activity": "PURCHASER_OR_SENDER",
          "naics_code": "722",
          "type_of_business": "Food Services and Drinking Places",
          "phone_numbers": [
    {
          "phone_number": "4151231234",
          "extension": "123",
          "phone_type": "HOME" } ],
          "email addresses": [
    "prancing-pony-inn@shiremail.com",
    "owner@innoftheprancingpony.com"
    ],
    "websites": [
    "innoftheprancingpony.com",
    "po.ny",
    "prancingpony.geocities.com"
    ]
    "addresses": [
    {
          "address_line_1": "A hole in the ground",
          "address_line_2": "Sackville-Baginses",
          "city": "Bag End",
          "state": "ME",
          "country": "US",
          "postal_code": "12345" } ],
          "identity_documents": [
    {
          "type": "DRIVERS_LICENSE",
          "number": 1234567890,
          "issuing_state": "ME",
          "issuing_country": "US" } ],
          "institution_relationships": [
    {
          "institution_tin": "123121234",
          "relationships": [],
          "status": "RELATIONSHIP_CONTINUES",
          "action_date": "2019-07-23120:17:06Z"
        }
    ],
          "other_info": [
    {
          "label": "House",
          "value": Elrond"
          }
    ]
 }
```

*A business represents a Subject to a Case that is a business entity.*

### PROPERTIES

| Name | Type | Required | Restrictions | Description |
|---|---|---|---|---|
| token | string | false | none | Unique identifier created by Hummingbird for the resource. Required when fetching, but not when creating, |
| id | string | false | none | Your id for this business, |
| legal_names | [string] | false | none | Legal names forthe business, |
| dba_names | [string] | false | none | "Doing Business As" (DBA) names for the business, |
| tins | [TIN] | false | none | The TINs associated with the business. |
| role_in activity | RoleInActivity | false | none | Specify role in activity. |
| naics_code | string | false | none | The NAICS code forthe business. |
| type_of_business | string | false | none | The type of business, |
| phone_numbers | [PhoneNumber] | false | none | The phone numbers associated with the business, |
| email_addresses | [string] | false | none | The email addresses associated with the business. |
| websites | [string] | false | none | The websites associated with the business, |
| addresses | [Address] | false | none | The addresses associated with the business. |
| identity_documents | [IdentityDocument] | false | none | The identity documents associated with the business. |
| institution_relationships | [InstitutionRelationship] | false | none | The relationships this business has with an institution. |
| other_info | [GenericKeyValuePair] | false | none | Set of key/value pairs of related data. |

### 8. CaseRequest

```
 {
  "case": {
    "bank_accounts": [
          {} ],
    "businesses": [
          {} ],
    "cypto_addresses": [
          {}
    ],
    "devices": [
          {}
    ],
    "individuals": [
          {} ],
    "institutions": [
          {}
    ],
    "payment_cards": [
          {}
    ],
    "products": [
          {} ],
    "transactions": [
          {} ],
    "token": "<case-token>",
    "id": "CS-123ABC",
    "name": "Suspicious Ring",
    "type": "filing",
    "assignee": "<hummingbird-account-token>,
    "filings": [
          {}
    ],
    "other_info": [
          {}
    ]
  }
 }
```

### PROPERTIES

| Name | Type | Required | Restrictions | Description |
|---|---|---|---|---|
| case | Case | true | none | A case is the core resource behind the Hummingbird AML workflow tools. Create a Case to begin using Humminbird to investigate a potentially suspicious activity. All data can be added to a Case on creation, or after creation by creating the associated data objects, |

### 9. CaseData

```
 {
  "bank_accounts": [
    {
          "token": "<bank-account-token>"
          "id": "BA-123ABC",
          "account_holder_id": "ID-123ABC",
          "institution_id": "IN-123ABC",
          "fingerprint": "bc3c3aee9c4a32fc4c01b5a20c6d481d",
          "routing_number": "021001021",
          "account_number": "002575960020289900212369",
          "account_type": "DEPOSITORY",
          "account_subtype": "CHECKING",
          "country": "US",
          "state": "CA",
          "opened_at": "2019-07-23T20:17:06Z",
          "closed_at": "2019-07-23T20:17:06Z",
          "other_info": []
    }
  ],
          "businesses": [
    {
          "token": "<business-token>",
          "id": "BZ-123-ABC",
          "legal_names": [],
          "dba_names": [],
          "tins": [],
          "role_in_activity": "PURCHASER_OR_SENDER",
          "naics": "722",
          "type_of_business": "Food Services and Drinking Places",
          "phone_numbers": [],
          "email_addresses": [],
          "websites": [],
          "addresses": [],
          "identity_documents": [],
          "institution_relationships": [],
          "other_info": []
    }
 ],
          "crypto_addresses": [
    {
          "token": "<crypto-address-token>",
          "id": "CR-123-ABC",
          "account_holder_id": "ID-123ABC",
          "institution_id": "IN-123ABC",
          "blockchain": "BITCOIN",
          "address": "c176e6cca1f74cb19d458874716cac4e",
          "other_info": []
    }
 ],
          "devices": [
    {
          "token": "<device-token>",
          "id": "DV-123-ABC",
          "owner_id": "PE-123-ABC",
          "ip_address": "206.189.73.52",
          "fingerprint": "4c2773c6b3adeb55f38ab28579eaaa94",
          "name": "Legolas' iPhone",
          "operating_system": "iOS 12.2",
          "browser": "Firefix",
          "user_agent": "Mozilla/5.0 (iPhone; ElvishMods)",
          "first_seen_at": "2019-07-23T20:17:06Z",
          "last_seen_at": "2819-87-23T28:17:86Z",
          "other_info": []
    }
 ],
          "individuals": [
    {
          "token": "<individual-token>",
          "id": "ID-123ABC",
          "names": [],
          "tins": [],
          "role_in_activity": "PURCHASER_OR_SENDER",
          "gender": "UNKNOWN",
          "birthdates": [],
          "phone_numbers": [],
          "email_addresses": [],
          "websites": [],
          "addresses": [],
          "identity_documents": [],
          "institution_relationships": [],
          "occupations": [],
          "usernames": [],
          "other_info": []
    }
 ],
          "institutions": [
    {
          "token": "<institution-token>",
          "id": "IN-123ABC",
          "institution_type": "CASINO_OR_CARD_CLUB",
          "institution_type_other": "Quest Party",
          "name": "Bank of the Shire",
          "alternate_names": [],
          "tin": "123121234",
          "tin_type": "EIN",
          "identification": {},
          "primary_federal_regulator": "CFTC",
          "contact_office": "Compliance",
          "contact_phone": "4151231234",
          "internal_control_number": "HB-AML-2019_123",
          "addresses": [],
          "role_in_transaction": "SELLING_LOCATION",
          "loss_to_institution": {},
          "branches": []
    }
 ],
          "payment_cards": [
    {
          "token": "<payment-card-token>".
          "id": "PC-123ABC",
          "account"_holder_id": "ID-123ABC",
          "institution_id": "IN-123ABC",
          "fingerprint": "7322ebdac43a5f05f7a642b08db50526",
          "network": "VISA",
          "bin": "41111111",
          "last_4": "1234",
          "card_type": "CREDIT",
          "expiration": {},
          "avs": "12345",
          "issued_at": "2019-07-23T20:17:06Z",
          "closed_at": "2019-07-23T20:17:06Z",
          "other_info": []
    }
 ],
          "products": [
    {
          "token": "<product-token>",
          "id": "PR-123ABC",
          "name": "One Ring",
          "cusip": "123456789",
          "sku": "SAURON-6578990685764-RING",
          "market": "NYSE",
          "commodity_type": "Magical Artefact",
          "other_info": [],
    }
 ],
          "transactions": [
    {
          "token": "<transaction-token>",
          "id": "TXN-123ABC",
          "instrument_type": "CREDIT_CARD",
          "tags": [],
          "description": "$300 ACH transfer from ***1123 tto ***1212".
          "amount": {},
          "amount_local": {},
          "response_code": "0400",
          "initiated_at": "2019-07-23T20:17:06Z",
          "completed_at": "2019-07-23T20:17:06Z",
          "status": "Completed",
          "iso_8583_message_type": "0100",
          "iso_18245_merchant_category_code": "3452",
          "direction": "CREDIT",
          "location": {},
          "source": {},
          "destination": {},
          "events": [],
          "other_info": []
    }
   ]
 }
```

*Information to associate with a case including subject PII, addresses, businesses, accounts, device information, IP addresses*, *transactions, financial institutions, products, credit*/*debit cards, etc.*

### PROPERTIES

| Name | Type | Required | Restrictions | Description |
|---|---|---|---|---|
| bank_accounts | [BankAccount] | false | none | List of Bank Accounts to add. |
| businesses | [Business] | false | none | List of Businesses to add. |
| crypto_addresses | [CryptoAddress] | false | none | List of Crypto Addresses to add. |
| devices | [Device] | false | none | List of Devices to add. |
| individuals | [Individual] | false | none | List of Individuals to add. |
| institutions | [Institution] | false | none | List of Institutions to add. |
| payment_cards | [PaymentCard] | false | none | List of Payment Cards to add. |
| products | [Product] | false | none | List of Products to add. |
| transactions | [Transaction] | false | none | List of Transactions to add to this case. |

### 10. Case

```
 {
 "bank_accounts": [
    {
          "token": "<bank-account-token>",
          "id": "BA-123ABC",
          "account_holder_id": "ID-123ABC",
          "institution_id": "IN-123ABC",
          "fingerprint": "bc3c3aee9c4a32fc4c01b5a20c6d481d",
          "routing_number": "021001021",
          "account_number": "002575960020289900212369",
          "account_type": "DEPOSITORY",
          "account_subtype": "CHECKING",
          "country": "US",
          "state": "CA",
          "opened_at": "2019-07-23T20:17:06Z",
          "closed_at": "2019-07-23T20:17:06Z",
          "other_info": []
    }
 ],
          "businesses": [
    {
          "token": "<business-token>",
          "id": "BZ-123-ABC",
          "legal_names": [],
          "dba_names": [],
          "tins": [],
          "role_in_activity": "PURCHASER_OR_SENDER",
          "naics": "722",
          "type_of_business": "Food Services and Drinking Places",
          "phone_numbers": [],
          "email_addresses": [],
          "websites": [],
          "addresses": [],
          "identity_documents": [],
          "institution_relationships": [],
          "other_info": []
    }
 ],
          "crypto_addresses": [
    {
          "token": "<crpto_address_token>",
          "id": "CR-123-ABC",
          "account_holden_id": "ID-123ABC",
          "institution_id": "IN-123ABC",
          "blockchain": "BITCOIN",
          "address": "c176e6cca1f74cb19d458874716cac4e",
          "other_info": []
    }
 ],
          "devices": [
    {
          "token": "device-token",
          "id": "DV-123-ABC",
          "owner_id": "PE-123-ABC",
          "ip_address": "206.189.73.52",
          "fingerprint": "4c2773c6b3adeb55f38ab28579eaaa94",
          "name": "Legolas' iPhone",
          "operating_system": "iOS 12.2",
          "browser": "Firefix",
          "user_agent": "Mozilla/5.0 (iPhone; ElvishMods)",
          "first_seen_at": "2019-07-23T20:17:06Z",
          "other_info": []
    }
 ],
          "individuals": [
    {
          "token": "<individual-token>",
          "id": "ID-123ABC",
          "names": [],
          "tins": [],
          "role_in_activity": "PURCHASER_OR_SENDER",
          "gender": "UNKNOWN",
          "birthdates": [],
          "phone_numbers": [],
          "email_addresses": [],
          "websites": [],
          "addresses": [],
          "identity_documents": [],
          "institution_relationships": [],
          "occupations": [],
          "usernames": [],
          "other_info": []
    }
 ],
          "institutions": [
    {
          "token": "<institution-token>",
          "id": "IN-123ABC",
          "institution_type": "CASINO_OR_CARD_CLUB",
          "institution_type_other": "Quest Party",
          "name": "Bank of the Shire",
          "alternate_names": [],
          "tin": "123121234",
          "tin_type": "EIN",
          "identification": {},
          "primary_federal_regulator": "CFTC",
          "contact_office": "Compliance",
          "contact_phone": "4151231234",
          "internal_control_number": "HB-AML-2019_123",
          "addresses": [],
          "role_in_transaction": "SELLING_LOCATION",
          "loss_to_institution": {},
          "branches": []
    }
 ],
          "payment_cards": [
    {
          "token": "<payment-card-token>",
          "id": "PC-123ABC",
          "account_holder_id": "ID-123ABC",
          "institution_id": "IN-123ABC",
          "fingerprint": "7322ebdac43a5f05f7a642b08db50526",
          "network": "VISA",
    "bin": "41111111",
          "last_4": "1234",
          "card_type": "CREDIT",
          "expiration": {},
          "avs": "12345",
          "issued_at": "2019-07-23T20:17:06Z",
          "closed_at": "2019-07-23T20:17:06Z",
          "other_info": []
    }
 ],
          "products": [
    {
          "token": "<product-token>",
          "id": "PR-123ABC",
          "name": "One Ring",
          "cusip": "123456789",
          "sku": "SAURON-657890685764-RING",
          "market": "NYSE",
          "commodity_type": "Magical Artefact",
          "other_info": []
    }
 ],
          "transactions": [
    {
          "token": "<transaction-token>",
          "id": "TXN-123ABC",
          "instrument_type": "CREDIT_CARD",
          "tags": [],
          "description": "$300 ACH transfer from ***1123 tto ***1212".
          "amount": {},
          "amount_local": {},
          "response_code": "0400",
          "initiated_at": "2019-07-23T20:17:06Z",
          "completed_at": "2019-07-23T20:17:06Z",
          "status": "Completed",
          "iso_8583_message_type": "0100",
          "iso_18245_merchant_category_code": "3452",
          "direction": "CREDIT",
          "location": {},
          "source": {},
          "destination": {},
          "events": [],
          "other-info": []
    }
 ],
          "token": "<case-token>",
          "id": "CS-123ABC",
          "name": "Suspicious Ring",
          "type": "filing",
          "assignee": "<hummingbird-account-token>",
          "filings": [
    {
          "jurisdiction": "FINCEN",
          "token": "<filing-token>",
          "id": "FI-123ABC",
          "internal_control_number": "HB-AML-2019_123",
          "prior_report_number": "123456789012345",
          "filing_type": "INITIAL",
          "joint_report": true,
          "amount_involved": {},
          "amount_blank_reason": "AMOUNT_UNKNOWN",
          "activity_started_at": "2019-07-23120:17:06Z",
          "activity_ended_at": "2019-07-23T20:17:06Z",
          "timeline_started_at": "2019-07-23T20:17:06Z",
          "cumulative_amount": {},
          "activities": [],
          "activities_other": [],
          "product_types": [],
          "product_types_other": [],
          "instruments": [],
          "instruments_other": [],
          "law enforcement_contact": {},
          "alerts": [],
          "narrative": "When Mr. Bilbo Baggins of Bag End announced that he would shortly...'
          "note_to_fincen": "FIN-2019-MIDDLEEARTH",
          "other_info": []
    }
 ],
          "other_info": [
    {
          "label": "House",
          "value": "Elrond"
    }
 ]
}
```

*A case is the core resource behind the Hummingbird AML workflow tools. Create a Case to begin using Humminbird to investigate a potentially suspicious activity. All data can be added to a Case on creation, or after creation by creating the associated data objects.*

### PROPERTIES

### allOf

| Name | Type | Required | Restrictions | Description |
|---|---|---|---|---|
| *anonymous* | CaseData | false | none | Information to associate with a case including subject PII, addresses, businesses, accounts, device information, IP addresses, transactions, financial institutions, products, credit/debit cards, etc. |

*and*

| Name | Type | Required | Restrictions | Description |
|---|---|---|---|---|
| *anonymous* | object | false | none | none |
| » token | string | false | none | Unique identifier created by Hummingbird for the case. Required when fetching a case, but not when creating a case. |
| » id | string | false | none | Unique identifier that your organization uses for the case, |
| » name | string | false | none | Descriptive name forthe case. |

| Name | Type | Required | Restrictions | Description |
|---|---|---|---|---|
| » type | string | true | none | Identifies the case type. |
| » assignee | string | false | none | Assigns the case to a specific person, identified by token. |
| » filings | [Filing] | false | none | List of Filings for jurisdictions, |
| » other_info | [GenericKeyValuePair] | false | none | List of generic key/value pairs. |

### ENUMERATED VALUES

| Property | Value |
|---|---|
| type | filing |

### 11. CryptoAddress

```
 {
    "token": "<crypto-address-token>",
    "id": "CR-123-ABC",
    "account_holder_id": "ID-123ABC",
    "institution_id": "IN-123ABC",
    "blockchain": "BITCOIN",
    "address": "cl76e6ccalf74cbl9d458074716cac4e",
    "other-info": [
            {
                  "label": "House",
                  "value": "Elrond".
            }
    ]
 }
```

*A Crypto Address represents information about an address used to send value over a blockchain. Each Crypto* Address *is owned by a single individual or institution.* PROPERTIES

| Name | Type | Required | Restrictions | Description |
|---|---|---|---|---|
| token | string | false | none | Unique identifier created by Hummingbird for the resource. Required when fetching, but not when creating. |
| id | string | false | none | Your id for this crypto address. |
| account_holder_id | string | false | none | The account holder for this account. The ID is the one provided by you. |
| institution_id | string | false | none | The institution holding the account. The ID is the one provided by you. |
| blockchain | string | false | none | Specify blockchain where address lives, |
| address | string | false | none | none |
| other_info | [GenericKeyValuePair] | false | none | List of generic key/value pairs. |

### 12. Currency

### PROPERTIES

| Name | Type | Required | Restrictions | Description |
|---|---|---|---|---|
| amount | integer | false | none | Amount in the lowest denomination of the currency. For example, for USD, this would be the amount in cents, |
| currency_code | string | false | none | none |

```
 {
     "amount": 12345,
     "currency_code": "USD",
 }
```

### ENUMERATED VALUES

| Property | Value |
|---|---|
| currency_code | USD |

### 13. Device

```
 {
    "token": "<device-token>",
    "id": "DV-123-ABC",
    "owner_id": "PE-123-ABC",
    "ip_address": "206.189.73.52",
    "fingerprint": "4c2773c6b3adeb55f38ab28579eaaa94",
    "name": "Legolas' iPhone",
    "operating_system": "iOS 12.2",
    "browser": "Firefix",
    "user_agent": "Mozilla/5.0 (iPhone; ElvishMods)",
    "first_seen_at": "2019-07-23120:17:06Z",
    "last_seen_at": "2019-07-23T20:17:06Z",
    "other-info": [
            {
                  "label": "House",
                  "value": "Elrond"
            }
    ]
 }
```

A *Device represents information about a user session in your app or website from a device* such as *a laptop or mobile phone. Each Device can be linked to a single related Individual or Business object, though they may share characteristics like IP Address and fingerprint.*

### PROPERTIES

| Name | Type | Required | Restrictions | Description |
|---|---|---|---|---|
| token | string | false | none | Unique identifier created by Hummingbird for the resource. Required when fetching, but not when creating, |
| id | string | false | none | Your id for this device, |
| owner_id | string | false | none | The owner of this device. The ID is the one provided by you. |
| ip_address | string | false | none | Specify IP address of device. |
| fingerprint | string | false | none | Any unique device identifier, |
| name | string | false | none | none |

| Name | Type | Required | Restrictions | Description |
|---|---|---|---|---|
| operating_system | string | false | none | none |
| browser | string | false | none | none |
| user_agent | string | false | none | none |
| first_seen_at | string(date-time) | false | none | none |
| last_seen_at | string(date-time) | false | none | none |
| other_info | [GenericKeyValuePair] | false | none | List of generic key/value pairs. |

### 14. Filing

```
 {
 "jurisdiction": "FINCEN",
 "token": "<filing-token>",
 "id": "FI-123ABC",
 "internal_control_number": "HB-AML-2019_123",
 "prior_report_number": "123456789012345",
 "filing_type": "INITIAL",
 "joint_report": true,
 "amount_involved": {
    "amount": 12345,
    "currency_code": "USD" },
    "amount_blank_reason": "AMOUNT_UNKNOWN",
    "activity_started_at": "2019-07-23120:17:06Z",
    "activity_ended_at": "2019-07-23T20:17:06Z",
    "timeline_started_at": "2019-07-23120:17:06Z",
    "cumulative_amount": {
    "amount": 12345,
    "currency_code": "USD",
    },
    "activities": [
    "CREDIT_OR_DEBIT_CARD",
    "HIGH_RISK_JURISDICTION"
    ],
    "activities_other": [
    {
          "category": "IDENTIFICATION",
          "value": "Magical creatures" }
    {
          "category": "OTHER",
          "value": "Darkweb ring",
    }
    ],
          "product_types": [
    "BOND_NOTES",
    "CREDIT_CARD",
    "OTHER",
    ],
    "product_types_other": [
    "Cryptocurrency"
    ],
    "instruments": [
    "US_CURRENCY",
    "FOREIGN_CURRENCY"
    ],
    "instruments_other": [
    "Bitcoin"
    ],
    "law_enforcement_contact": {
    "agency": "FBI",
    "name": "Aragorn Elessar"
    "email": "aragorn@fbi.gov",
    "telephone": "4151231234",
    "extension": "123",
    "date": "2019-07-23T20:17:06Z"
    },
    "alerts": [
    {
          "token": "<alert-token>",
          "id": "ALERT-123ABC",
          "triggered_at": "2019-07-23T20:17:06Z",
          "rule": "Weekly Average Transaction Size",
          "references": [],
          "comments": "Three transactions over $800 were seen within a single week.",
          "other_info": []
    }
 ],
          "narrative": "When Mr. Bilbo Baggins of Bag End announced that he would shortly...",
          "note_to_fincen": "FIN-2019-MIDDLEEARTH",
          "other-info": [
    {
          "label": "House",
          "value": "Elrond"
    }
  ]
 }
```

*A Filing is the resource that describes the details of the filing in a particular jurisdiction. The details of the case referenced are brought into the filing automatically as appropriate. Note that the filing data below is specific to FinCEN's required filing format. We anticipate the filing data to be different for each jurisdiction.*

### PROPERTIES

| Name | Type | Required | Restrictions | Description |
|---|---|---|---|---|
| jurisdiction | string | true | none | The filing jurisdiction |
| token | string | false | none | Unique identifier created by Hummingbird for the resource. Required when fetching, but not when creating, |
| id | string | false | none | Your id for this filing. |
| internal_control_number | string | false | none | If no value is sent, and you have configured a rule in Hummingbird, this will be generated on your behalf. |
| prior_report_number | string | false | none | Required if the filing type is CONTINUING or CORRECT_OR_AMEND. Invalid and disallowed for initial filings.. |
| filing_type | string | true | none | none |
| joint_report | boolean | false | none | Defaults to false if not present. |
| amount_involved | Currency | false | none | Amount involved in the suspicious activity. Defaults to 0. |
| amount_blank_reason | string | false | none | Required if the amount involved is missing or zero. Invalid and disallowed for other filing types. |
| activity_started_at | string(date-time) | false | none | Date that the suspicious activity started at. |
| activity_ended_at | string(date-time) | false | none | Date that the suspicious activity started at. |
| timeline_started_at | string(date-time) | false | none | The date in which your investigation began. |
| cumulative_amount | Currency | false | none | Required if filing type is CORRECT_OR_AMEND. Invalid and disallowed for other filing types. |
| activities | [string] | false | none | List of Activities to add. See the appendix for a list of activities. |
| activities_other | [ActivitiesOther] | false | none | Other, text-entry activities. |
| product_types | [string] | false | none | List of Product Types to add. See the appendix for a list of product types. |
| product_types_other | [string] | false | none | Other product types. |

| Name | Type | Required | Restrictions | Description |
|---|---|---|---|---|
| instruments | [string] | false | none | List of Instruments to add, See the appendix for a list of instrument types. |
| instruments_other | [string] | false | none | Other instruments. |
| iaw_enforcement_contact | object | false | none | Law Enforcement Contact to add. |
| » agency | string | false | none | Name of agency you're working with. |
| » name | string | false | none | Name of contact. |
| » email | string | false | none | Email address of contact. |
| » telephone | string | false | none | none |
| » extension | string | false | none | none |
| » date | string(date-time) | false | none | Most recent date of contact. |
| alerts | [Alert] | false | none | List of alerts that triggered this filing. |
| narrative | string | false | none | Detailed description of investigation and the findings. |
| note_to_fincen | string | false | none | Short note to FinCEN. Max 50 characters in length, |
| other_info | [GenericKeyValuePair] | false | none | Set of key/value pairs of related data. |

### ENUMERATED VALUES

| Property | Value |
|---|---|
| jurisdiction | FINCEN |
| filing_type | INITIAL |
| filing_type | CORRECT_OR_AMEND |
| filing_type | CONTINUING |
| amount_blank_reason | AMOUNT_UNKNOWN |
| amount_blank_reason | NO_AMOUNT_INVOLVED |

### 15. GenericKeyValuePair

```
 {
    "label": "House",
    "value": "Elrond"
 }
```

### PROPERTIES

| Name | Type | Required | Restrictions | Description |
|---|---|---|---|---|
| label | string | false | none | none |
| value | string | false | none | none |

### 16. IdentityDocument

```
 {
    "type": "DRIVERS_LICENSE",
    "number": 1234567890,
    "issuing_state": "ME",
    "issuing_country": "US"
 }
```

### PROPERTIES

| Name | Type | Required | Restrictions | Description |
|---|---|---|---|---|
| type | string | false | none | none |
| number | string | false | none | none |
| issuing_state | string | false | none | none |
| issuing_country | string | false | none | none |

### ENUMERATED VALUES

| Property | Value |
|---|---|
| type | DRIVERS_LICENSE |
| type | PASSPORT |
| type | ALIEN_REGISTRATION |
| type | OTHER |

### 17. IdAndType

```
 {
    "id": "ID-123ABC",
    "type": "INDIVIDUAL",
 }
```

*Provide an id and type of an existing resource*.

### PROPERTIES

| Name | Type | Required | Restrictions | Description |
|---|---|---|---|---|
| id | string | false | none | Your id for this resource. |
| type | string | false | none | Type of resource. |

### ENUMERATED VALUES

| Property | Value |
|---|---|
| type | INDIVIDUAL |
| type | BUSINESS |
| type | INSTITUTION |
| type | BANK_ACCOUNT |
| type | CRYPTO_ADDRESS |
| type | PAYMENT_CARD |

### 18. Individual

```
 {
 "token": "<individual-token>",
 "id": "ID-123ABC",
 "names": [
    {
          "name": "Falco Chubb Baggins III",
          "first_name": "Falco",
          "middle_name": "Chubb",
          "last_name": "Baggins",
          "suffix": "III"
    }
 ],
          "tins": [
    {
          "number": "string",
          "type": "EIN" } ],
          "role_in_activity": "PURCHASER_OR_SENDER",
          "gender": "UNKNOWN",
          "birthdates": [
    "2019-07-23"
    ],
    "phone_numbers": [
    {
          "phone_number": "4151231234",
          "extension": "123",
          "phone_type": "HOME"
    }
 ]
          "email_addresses": [
    "bilbo@bagend-bagginses.com",
    "bilbobaggins@hotmail.com"
    ],
    "websites": [
    "bagend-bagginses.com",
    "bbaggins.livejournal.com",
    "facebook.com/bbaggins"
    ],
    "addresses": [
    {
          "address_line_1": "A hole in the ground",
          "address_line_2": "Sackville-Bagginses",
          "city": "Bag End",
          "state": "ME",
          "country": "US",
          "postal_code": "12345"
    }
 ],
          "identity_documents": [
    {
          "type": "Drivers_License",
          "number": 1234567890,
          "issuing_state": "ME",
          "issuing_country": "US" } ],
          "institution_relationships": [
    {
          "institution_tin": "123121234",
          "relationships": [],
          "status": "RELATIONSHIP_CONTINUES",
          "action_date": "2019-07-23120:17:06Z"
    }
 ],
          "occupations": [
    {
          "company": "Jewelry Store",
          "industry": "Jewelry, Luggage, and Leather Goods",
          "occupation": "Jewelry Thief",
          "website"; "ringstorulethem.com",
          "naics_code": "4483"
    }
 ],
          "usernames": [
    "bbaggins",
    "thiefofbilbo"
    ],
    "other-info": [
    {
          "label": "House",
          "value": "Elrond"
    }
    ]
 }
```

*An Individual represents a Subject to a Case that is a person and not a business entity.*

### PROPERTIES

| Name | Type | Required | Restrictions | Description |
|---|---|---|---|---|
| token | string | false | none | Unique identifier created by Hummingbird for the resource. Required when fetching, but not when creating. |
| id | string | false | none | Your id for this individual. |
| names | [Name] | false | none | The names associated with the individual. |
| tins | [TIN] | false | none | The TINs associated with the individual. |
| role_in activity | RoleInActivity | false | none | Specify role in activity. |
| gender | string | false | none | MALE, FEMALE, OTHER or UNKNOWN, Default UNKNOWN, |
| birthdates | [string] | false | none | Can list multiple if person has used multiple dates, |
| phone_numbers | [PhoneNumber] | false | none | The phone numbers associated with the individual. |
| email_addresses | [string] | false | none | The email addresses associated with the individual. |
| websites | [string] | false | none | The websites associated with the individual. |
| addresses | [Address] | false | none | The addresses associated with the individual. |
| identity_documents | [IdentityDocument] | false | none | The identity documents associated with the individual. |
| institution_relationships | [lnstitutionRelationship] | false | none | The relationships this individual has with an institution, |
| occupations | [Occupation] | false | none | The occupations associated with the individual. |
| usernames | [string] | false | none | The usernames associated with the individual. |
| other_info | [GenericKeyValuePair] | false | none | Set of key/value pairs of related data, |

### ENUMERATED VALUES

| Property | Value |
|---|---|
| gender | MALE |
| gender | FEMALE |
| gender | OTHER |
| gender | UNKNOWN |

### 19. Institution

```
 {
 "token": "<institution-token>",
 "id": "IN-123ABC",
 "institution_type": "CASINO_OR_CARD_CLUB",
 "institution_type_other": "Quest Party",
 "name": "Bank of the Shire",
 "alternate_names": [
    "Brandywine Bank",
    "Shire Bank"
    ],
    "tin": "123121234",
    "tin_type": "EIN",
    "identification": {
    "type": "CRD",
    "number": "string", },
    "primary_federal_regulator": "CFTC",
    "contact_office": "Complicance",
    "contact_phone": "4151231234",
    "internal_control_number": "HB-AML-2019 123",
    "addresses": [
    {
          "address_line_1": "A hole in the ground",
          "address_line_2": "Sackville-Bagginses",
          "city": "Bag End",
          "state": "ME",
          "country": "US",
          "postal_code": "12345" } ],
          "role_in_transaction": "SELLING_LOCATION",
          "loss_to_institution": {
    "amount": 12345,
    "currency_code": "USD" },
    "branches": [
    {
          "label": "House",
          "value": "Elrond"
    }
   ]
 }
```

### PROPERTIES

| Name | Type | Required | Restrictions | Description |
|---|---|---|---|---|
| token | string | false | none | Unique identifier created by Hummingbird for the resource. Required when fetching, but not when creating, |
| id | string | false | none | Your id for this institution, |
| institution_type | string | true | none | Type of institution. Leave blank or set to OTHER if specifying institution_type_other, |

| Name | Type | Required | Restrictions | Description |
|---|---|---|---|---|
| institution_type_other | string | false | none | Other type of institution. Specify either this or institution type, |
| name | string | false | none | Legal name of the institution, |
| alternate_names | [string] | false | none | List of DBA and AKA names. |
| tin | string | true | none | Tax ID for the institution, |
| tin_type | string | true | none | Tax ID type. Defaults to EIN. |
| identification | object | false | none | The unique identification for this institution, |
| » type | string | false | none | none |
| » number | string | false | none | none |
| primary_federal_regulator | string | true | none | none |
| contact_office | string | false | none | none |
| contact_phone | string | false | none | none |
| internal_control_number | string | false | none | none |
| addresses | [Address] | false | none | The addresses associated with the institution. |
| role_in_transaction | string | false | none | none |
| loss_to_institution | Currency | false | none | none |
| branches | [GenericKeyValuePair] | false | none | List of generic key/value pairs. |

### ENUMERATED VALUES

| Property | Value |
|---|---|
| institution_type | CASINO_OR_CARD_CLUB |
| institution_type | DEPOSITORY_INSTITUTION |
| institution_type | INSURANCE_COMPANY |
| institution_type | MSB |
| institution_type | SECURITIES_OR_FUTURES |
| institution_type | LOAN_OR_FINANCE_COMPANY |
| institution_type | HOUSING_GSE |
| institution_type | OTHER |
| tin_type | EIN |
| tin_type | FOREIGN |
| type | CRD |
| type | IARD |
| type | RSSD |
| type | SEC |

| Property | Value |
|---|---|
| type | NAIC |
| type | NMLS |
| primary_federal_regulator | CFTC |
| primary_federal_regulator | FRB |
| primary_federal_regulator | FDIC |
| primary_federal_regulator | IRS |
| primary_federal_regulator | NCUA |

| | |
|---|---|
| primary_federal_regulator | OCC |
| primary_federal_regulator | SEC |
| primary_federal_regulator | FHFA |
| primary_federal_regulator | NOT_APPLICABLE |
| role_in_transaction | SELLING_LOCATION |
| role_in_transaction | PAYING_LOCATION |
| role_in_transaction | BOTH |

### 20. InstitutionRelationship

```
 {
    "institution_tin": "123121234",
    "relationships": [
           "ACCOUNTANT"
    ],
    "status": "RELATIONSHIP_CONTINUES",
    "action_date": "2019-07-23T20:17:06Z"
 {
```

### PROPERTIES

| Name | Type | Required | Restrictions | Description |
|---|---|---|---|---|
| institution_tin | string | false | none | none |
| relationships | [string] | false | none | none |
| status | string | false | none | none |
| action_date | string(date-time) | false | none | none |

### ENUMERATED VALUES

| Property | Value |
|---|---|
| status | RELATIONSHIP_CONTINUES |
| status | SUSPENDED |

| Property | Value |
|---|---|
| status | RESIGNED |
| status | TERMINATED |

### 21. Name

```
 {
    "name": "Falco Chubb Baggins III",
    "first_name": "Falco",
    "middle_name": "Chubb",
    "last_name": "Baggins",
    "suffix": "III"
 }
```

*The value recorded for name will use the 'name' value first, but if only firstlmiddleΛast are provided, the name is constructed from the parts provided.* PROPERTIES

| Name | Type | Required | Restrictions | Description |
|---|---|---|---|---|
| name | string | false | none | Name of resource |
| first_name | string | false | none | First name of resource |
| middle_name | string | false | none | Middle name of resource |
| last_name | string | false | none | Last name of resource |
| suffix | string | false | none | Suffix of resource |

### 22 Occupation

```
 {
    "company": "Jewelry Store",
    "industry": "Jewelry, Luggage, and Leather Goods",
    "occupation": "Jewelry Thief",
    "website": "ringstorulethem.com",
    "naics_code": "4483"
 }
```

### PROPERTIES

| Name | Type | Required | Restrictions | Description |
|---|---|---|---|---|
| company | string | false | none | none |
| industry | string | false | none | none |
| occupation | string | false | none | none |
| website | string | false | none | none |
| naics_code | string | false | none | none |

### 23. PaymentCard

```
 {
 "token": "<payment-card-token>",
 "id": "PC-123ABC",
 "account_holder_id": "ID-123ABC",
 "institution_id": "IN-123ABC",
 "fingerprint": "7322ebdac43a5f05f7a642b08db50526",
 "network": "VISA",
 "bin": "41111111",
 "last_4": "1234",
 "card_type": "CREDIT",
 "expiration": {
    "month": "05",
    "year": "24", },
    "avs": "12345",
    "issued_at": "2019-07-23T20:17:06Z",
    "closed-at": "2019-07-23T20:17:06Z",
    "other_info": [
    {
          "label": "House",
          "value": "Elrond"
          }
    ]
 }
```

A *Payment Card can be added for investigating links* between *cards.*

### PROPERTIES

| Name | Type | Required | Restrictions | Description |
|---|---|---|---|---|
| token | string | false | none | Unique identifier created by Hummingbird for the resource. Required when fetching, but not when creating. |
| id | string | false | none | Optional. Your id for this payment card. |
| account_hoider_id | string | false | none | The account holder for this card. The ID is the one provided by you. |
| institution_id | string | false | none | The institution backing this card. The ID is the one provided by you. |
| fingerprint | string | false | none | Uniquely identify this card in a way that is consistent across cases, |
| network | string | false | none | The card network assocaited with this payment card. |
| bin | string | false | none | none |
| last_4 | string | false | none | none |
| card_type | string | false | none | none |
| expiration | object | false | none | none |
| » month | string | false | none | none |
| » year | string | false | none | none |
| avs | string | false | none | none |
| issued_at | string(date-time) | false | none | none |
| closed_at | string(date-time) | false | none | none |
| other_info | [GenericKeyValuePair] | false | none | List of generic key/value pairs. |

### ENUMERATED VALUES

| Property | Value |
|---|---|
| card_type | CREDIT |
| card_type | DEBIT |
| card_type | PREPAID |
| card_type | GIFT |
| card_type | OTHER |

### 24. PhoneNumber

```
{
 "phone_number": "4151231234",
 "extension": "123",
 "phone_type": "HOME" }
```

### PROPERTIES

| Name | Type | Required | Restrictions | Description |
|---|---|---|---|---|
| phone_number | string | false | none | Phone number |
| extension | string | false | none | Phone extension |
| phone_type | string | false | none | Phone type |

### ENUMERATED VALUES

| Property | Value |
|---|---|
| phone_type | HOME |
| phone_type | WORK |
| phone_type | MOBILE |
| phone_type | FAX |

### 25. Product

```
 {
    "token": "<product-token>",
    "id": "PR-123ABC",
    "name": "One Ring",
    "cusip": "123456789",
    "sku": "SAURON-657890685764-RING",
    "market": "NYSE",
    "commodity_type": "Magical Artefact",
    "other_info": [
            {
                  "label": "House",
                  "value": "Elrond"
            }
    ]
 }
```

*A Product represents information about an object being bought or sold.*

### PROPERTIES

| Name | Type | Required | Restrictions | Description |
|---|---|---|---|---|
| token | string | false | none | Unique identifier created by Hummingbird for the resource. Required when fetching, but not when creating. |
| id | string | false | none | Your id for this product. |
| name | string | false | none | none |
| cusip | string | false | none | none |
| sku | string | false | none | none |
| market | string | false | none | none |
| commodity_type | string | false | none | none |
| other_info | [GenericKeyValuePair] | false | none | List of generic key/value pairs. |

### 26. RoleInActivity

### "Purchaser_OR_SENDER"

*Specify role in activity.*

### PROPERTIES

| Name | Type | Required | Restrictions | Description |
|---|---|---|---|---|
| *anonymous* | string | false | none | Specify role in activity. |

### ENUMERATED VALUES

| Property | Value |
|---|---|
| *anonymous* | PURCHASER_OR_SENDER |
| *anonymous* | PAYEE_OR_RECEIVER |
| *anonymous* | BOTH |
| *anonymous* | VICTIM |
| *anonymous* | OTHER |

### 27. TIN

```
 {
     "number": "string",
     "type": "EIN"
 }
```

### PROPERTIES

| Name | Type | Required | Restrictions | Description |
|---|---|---|---|---|
| number | string | false | none | TIN of business |
| type | string | false | none | Type of TIN |

### ENUMERATED VALUES

| Property | Value |
|---|---|
| type | EIN |
| type | SSN |
| type | FOREIGN |

### 28. Transaction

```
 {
 "token": "<transaction-token>",
 "id": "TXN-123ABC",
 "instrument_type": "CREDIT_CARD",
 "tags": [
    "Purchase",
    "Debit"
    ],
    "description": "$300 ACH transfer from ***1123 tto ***1212",
    "amount": {
    "amount": 12345,
    "currency_code": "USD"
    ii
    "amount_local": {
    "amount": 12345,
    "currency_code": "USD"
    },
    "response_code": "0400",
    "initiated_at": "2019-07-23T20:17:06Z",
    "completed_at": "2019-07-23T20:12:06Z",
    "status": "Completed",
    "iso_8583_message_type": "0100",
    "iso_18245_merchant_category_code": "3452",
    "direction": "CREDIT",
    "location": {
    "address_line_1": "A hole in the ground",
    "address_line_2": "Sackville-Bagginses",
    "city": "Bag End",
    "state": "ME",
    "country": "US",
    "postal_code": "12345"
    L
    "source": {
    "description": "CREDIT CARD STATEMENT DESCRIPTOR",
    "location": {
          "address_line_1": "A hole in the ground",
          "address_line_2": "Sackville-Bagginses",
          "city": "Bag End",
          "state": "ME",
          "country": "US",
          "postal_code": "12345"
    L
    "phone_number": {
          "phone_number": "4151231234",
          "extension": "123",
          "phone_type": "HOME"
    L
    "amount": {
          "amount": 12345,
          "currency_code": "USD"
    L
    "entity_ref": {
          "type": "individual",
          "id": "FI-123ABC"
    }
    "account_ref": {
          "type": "individual",
          "id": "FI-123ABC"
          L}
          "destination": {
    "description": "CREDIT CARD STATEMENT DESCRIPTOR",
    "location": {
          "address_line_1": "A hole in the ground",
          "address_line_2": "Sackville-Bagginses",
          "city": "Bag End",
          "state": "ME",
          "country": "US",
          "postal_code": "12345"
    L
    "phone_number": {
          "phone_number": "4151231234",
          "extension": "123",
          "phone_type": "HOME"
    L
    "amount": {
          "amount": 12345,
          "currency_code": "USD"
    },
    "entity_ref: {
          "type": "individual",
          "id": "FI-123ABC"
    }
    "account_ref": {
          "type": "individual",
          "id": "FI-123ABC"
    }
 },
          "events": [
    {
          "id": "TXN-EVT-123ABC",
          "description": "Card Authorized for $123.12",
          "occurred_at": "2019-07-23T20:17:06Z",
          "other_info": []
    }
 ],
    "other_info": [
    {
          "label": "House",
          "value": "Elrond"
    }
   ]
 }
```

### PROPERTIES

| Name | Type | Required | Restrictions | Description |
|---|---|---|---|---|
| token | string | false | none | Unique identifier created by Hummingbird for the resource. Required when fetching, but not when creating. |
| id | string | false | none | A unique reference id for this transaction. |
| instrument_type | string | false | none | What instrument was used to perform this transaction |
| tags | [string] | false | none | List of tags to apply to this transaction. Used within Hummingbird for aggregating and filtering transactions as part of an investigation. |
| description | string | false | none | A simple description of the transaction. |

| Name | Type | Required | Restrictions | Description |
|---|---|---|---|---|
| amount | Currency | false | none | Transaction amount. Actual amount of transaction and currency in which transaction took place. |
| amount_local | Currency | false | none | Amount of transaction in currency local to organization and jurisdiction. All transactions in a case must have the same currency for amount_local. For example, for a U.S. based institution, amount_local is the transaction amount in USD. |
| response_code | string | false | none | A string indicating the response from the processor. |
| initiated_at | string(date-time) | false | none | When was this transaction initiated? |
| completed_at | string(date-time) | false | none | When did this transaction complete? A.K.A. Post time. |
| status | string | false | none | What is the end status of this transaction? |
| iso 8583_message type | string | false | none | the ISO 8583 message type for this transaction. |
| iso_18245_merchant_category_code | string | false | none | The ISO 18245 merchant category code associated with this transaction. |
| direction | string | false | none | How should we interpret this transaction? Only necessary if endpoint data is not available. When endpoint data is provided, direction is determined by which endpoint the case subjects are associated with. |
| location | Address | false | none | Is there an address where this transaction occurred? |
| | | | | Transaction address should be the physical location of the transaction itself, if applicable. |
| source | TransactionEndpoint | false | none | Describe the source of funds. |
| destination | TransactionEndpoint | false | none | Describe the destiation where funds were sent. |
| events | [Transaction Event] | false | none | Break down the lifecycle of the transaction. |
| other_info | [GenericKeyValuePair] | false | none | List of generic key/value pairs to add to the transaction. |

### ENUMERATED VALUES

| Property | Value |
|---|---|
| instrument_type | CREDIT_CARD |

| | |
|---|---|
| instrument_type DEBIT_CARD | |
| instrument_type | CHECK |
| instrument_type | ACH |
| instrument_type | CASH |
| instrument_type | ATM |
| instrument_type | CRYPTO |
| instrument_type | MONEY_ORDER |
| instrument_type | OTHER |
| direction | CREDIT |
| direction | DEBIT |

### 29. TransactionEndpoint

```
 {
 "description": "CREDIT CARD STATEMENT DESCRIPTOR",
 "location": {
    "address_line_1": "A hole in the ground",
    "address_line_2": "Sackville-Bagginses",
    "city": "Bag End",
    "state": "ME",
    "country": "US",
    "postal_code": "12345"
    },
    "phone_number": {
    "phone_number": "4151231234",
    "extension": "123",
    "phone_type": "HOME"
    },
    "amount": {
    "amount": 12345,
    "currency_code": "USD"
    },
    "entity_ref: {
    "type": "individual",
    "id": "FI-123ABC"
    },
    "account_ref": {
    "type": "individual",
    "id": "FI-123ABC"
    }
 }
```

*Transactions are modeled as a flow of funds from a source endpoint to a destination endpoint. Given that for many transactions, the facilitating instititution only has visibility into one side of the transaction, endpoints can be either "generic", or tied to an entity/account in the case. Generic endpoints are defined by a string description, an optional location and optional phone number.

For example:
- For a check deposit, the institution knows about the destination of the transaction, but knows very little about the source - they may only have an account number and a name.
-

For a credit card purchase, the issuer knows a ton about the card holder, but nearly nothing about the merchant.

For a cash deposit, the institution knows a lot about the destination account and the account holder, but almost nothing about the source, unless it's also the account holder. The institution may need to take steps to determine where the payor obtained the cash (e.g. conduct a source of funds information request).

For wire transfers, the sending or receiving bank may have limited information about the counterparty endpoint (the payee or payor respectively). As an example, in commercial banking, understanding where and to whom the customer is wiring money is an important investigation practice.

Endpoints also have a required amount to handle the case where different currencies or amounts are present on the two sides of the transaction.*

### PROPERTIES

| Name | Type | Required | Restrictions | Description |
|---|---|---|---|---|
| description | string | false | none | String description of the endpoint. Used for endpoints where minimal information is known. Either provide a description or an entity/account. |
| location | Address | false | none | Where is this endpoint? Used for endpoints where minimal information is known. |
| phone_number | PhoneNumber | false | none | A phone number associated with this endpoint? Used for endpoints where minimal information is known. |
| amount | Currency | false | none | What amount was sent/received at this endpoint? |
| entity_ref | Reference | false | none | A reference to an entity (person/business) associated with the case. |
| account_ref | Reference | false | none | A reference to an account (bank account/payment card/crypto address) associated with the case. |

### 30. Reference

```
 {
 "type": "individual",
 "id": "FI-123ABC" }
```

### PROPERTIES

| Name | Type | Required | Restrictions | Description |
|---|---|---|---|---|
| type | string | false | none | What type of object are you referencing? |
| id | string | false | none | ID of the referenced object |

### ENUMERATED VALUES

| Property | Value |
|---|---|
| type | individual |
| type | business |
| type | entity |
| type | institution |
| type | payment_card |
| type | bank_account |
| type | crypto_address |
| type | device |
| type | product |
| type | attachment |
| type | transaction |

### 31. Transaction Event

```
 {
    "id": "TXN-EVT-123ABC",
    "description": "Card Authorized for $123.12",
    "occurred_at": "2019-07-23T20:17:06Z",
    "other_info": [
            {
                  "label": "House",
                  "value": "Elrond"
            }
    ]
 }
```

### PROPERTIES

| Name | Type | Required | Restrictions | Description |
|---|---|---|---|---|
| id | string | false | none | A unique reference id for this transaction event. |
| description | string | false | none | Describe the event that occurred. |
| occurred_at | string(date-time) | false | none | When did this event occur? |
| other_info | [GenericKeyValuePair] | false | none | List of generic key/value pairs to add to the alert. |

### 32. NotFoundError

```
{
 "success": false }
```

### PROPERTIES

| Name | Type | Required | Restrictions | Description |
|---|---|---|---|---|
| success | boolean | false | none | none |

### 33. FilingResponseObject

```
{
    "success": false,
    "filing": {
           "token": "<filing-token>",
           "id": "FI-123ABC",
           "bsa_id": "123456789012345",
           "status": "pending",
           "errors": [
                   ""
               ]
           }
 }
```

### PROPERTIES

| Name | Type | Required | Restrictions | Description |
|---|---|---|---|---|
| success | boolean | false | none | none |
| filing | object | false | none | none |

| Name | Type | Required | Restrictions | Description |
|---|---|---|---|---|
| » token | string | false | none | Unique identifier created by Hummingbird for the filing. |
| » id | string | false | none | Your id for the filing. |
| » bsa_id | string | false | none | 15 digit, unique number created by FinCEN for the case. |
| » status | string | false | none | The status of the filing. |
| » errors | [string] | false | none | Set of errors or warnings to be corrected. |

### ENUMERATED VALUES

| Property | Value |
|---|---|
| status | pending |
| status | filed |
| status | accepted |
| status | warning |
| status | primary_warning |
| status | fatal |

### 34. Validation ResponseObject

```
 {
     "success": true,
     "errors": {
            "information": [
                   "Add at least one financial institution"
            ],
            "businesses[0][tins][0][tin]" : [
                   "Tax ID number cannot be an incremental sequence of numbers."
            ]
     }
 }
```

### PROPERTIES

| Name | Type | Required | Restrictions | Description |
|---|---|---|---|---|
| success | boolean | false | none | Describes whether the case passed all validations. |
| errors | object | false | none | Set of errors or warnings to be corrected. |

## Claims

1. A computer implemented method for providing information relating to suspicious financial activities, the method comprising:
receiving a digital access token from a financial institution, the digital access token identifying the financial institution and including a token id;
causing an application programming interface API to be displayed on a computing device corresponding to the financial institution in response to receipt of the digital access token;
receiving case information, through the API, from the financial institution, the case information including information indicating at least an individual, an institution, and information relating to at least one financial transaction that is to be the subject of a report of suspicious activity to one or more investigative agencies;
receiving additional information from the financial institution relating the case information and storing the additional information in a database in correspondence to the token;
verifying the identity of the financial institution based on the access token;
creating a case corresponding to the access token and the case information;
determining one or more relevant investigative agencies for receiving a report based on the case information;
for each of the relevant investigative agencies, retrieving a corresponding data model associated with the relevant investigative agency, each corresponding data model indicating the information required by the investigative agency for a suspicious activity report, SAR, based on the case information;
for each of the relevant investigative agencies, validating that all essential information required by the investigative agency is included in the case information based on the corresponding data model;
for each of the relevant investigative agencies, filing a SAR with the investigative agency based on the case information in correspondence with the access token;
for each of the relevant investigative agencies, determining at least one preset search strategy based on the case information by parsing the case information based on a schema of the jurisdiction of the investigative agency and configuring preset searches based on the parsing; and
for at least one of the relevant investigative agencies, generating a message including a link to a secure browser, wherein the secure browser includes the determined at least one search strategy and is configured to run on a virtual machine to thereby permit the investigative agency to conduct auditable internet searches, based on the at least one search strategy, that will not be associated with computing devices of the investigative agency.

2. The method of claim 1, further comprising including a secure URL in at least one of the SARs, the secure URL providing the investigative agency with access to the additional information corresponding to the case information.

3. The method of claim 1 or 2, wherein each retrieved data model is based on reporting specifications of the corresponding investigative agency and wherein validating further comprises returning a validation issues message when validation cannot be completed due to missing or incorrect information, receiving corrected information, and attempting validation of the corrected information.

4. The method of claim 2 or 3, wherein the additional information includes at least one of data visualizations, maps, analysis tools, case data supporting documents, and/or communication tools that enable personnel at the investigative agency to send and receive messages a compliance professional who prepared the SAR.

5. The method of any of claims 2 to 4, wherein each secure URL is unique to the corresponding SAR.

6. The method of claim 5, wherein each secure URL has controls that include at least one of authentication that the user of the URL is personnel at the investigative agency, a time-based expiration, and/or access permissions to only desired ip addresses.

7. The method of any preceding claim, wherein an access token is required to make requests to the API and the access token expires at a predetermined time.

8. A computer system comprising:
one or more hardware processors configured by machine-readable instructions to perform the method of any of claims 1 to 7.

9. A non-transient computer-readable storage medium having instructions embodied thereon, the instructions being executable by one or more processors to perform the method of any of claims 1 to 7.

## Patentansprüche

1. Computerimplementiertes Verfahren zur Bereitstellung von Informationen im Zusammenhang mit verdächtigen finanziellen Aktivitäten, das Verfahren umfassend:
Erhalten eines digitalen Zugangstokens von einem Finanzinstitut, wobei das digitale Zugangstoken das Finanzinstitut identifiziert und eine Token-ID enthält;
Veranlassen der Anzeige einer Anwendungsprogrammierschnittstelle API auf einem dem Finanzinstitut entsprechenden Computergerät als Reaktion auf den Erhalt des digitalen Zugangstokens;
Erhalten von Fallinformationen von dem Finanzinstitut über die API, wobei die Fallinformationen zumindest eine Person, eine Einrichtung und Informationen enthält, die sich auf mindestens eine Finanztransaktion beziehen, die Gegenstand eines Berichts über verdächtige Aktivitäten an eine oder mehrere Ermittlungsbehörden sein soll;
Erhalten von zusätzlichen Informationen im Zusammenhang mit den Fallinformationen von dem Finanzinstitut und Speichern der zusätzlichen Informationen in einer Datenbank in Übereinstimmung mit dem Token;
Verifizieren und Identifizieren des Finanzinstituts basierend auf dem Zugangstoken;
Erstellen eines Falls entsprechend dem Zugangstoken und den Fallinformationen;
Bestimmen einer oder mehrerer relevanter Ermittlungsbehörden für den Erhalt eines Berichts basierend auf den Fallinformationen;
für jede der relevanten Ermittlungsbehörden: Abrufen eines der relevanten Ermittlungsbehörde zugeordneten entsprechenden Datenmodells, wobei jedes entsprechende Datenmodell die Informationen angibt, die von der Ermittlungsbehörde für einen Bericht über verdächtige Aktivitäten, SAR, basierend auf den Fallinformationen benötigt werden;
für jede der relevanten Ermittlungsbehörden: Validieren, dass alle wesentlichen Informationen, die von der Ermittlungsbehörde benötigt werden, in den Fallinformationen enthalten sind, basierend auf dem entsprechenden Datenmodell;
für jede der relevanten Ermittlungsbehörden: Einreichen einer SAR bei der Ermittlungsbehörde basierend auf den Fallinformationen in Übereinstimmung mit dem Zugangstoken;
für jede der relevanten Ermittlungsbehörden: Bestimmen mindestens einer voreingestellten Suchstrategie basierend auf den Fallinformationen durch Analysieren der Fallinformationen auf der Grundlage eines Schemas der Zuständigkeitsregelung der Ermittlungsbehörde und Konfigurieren voreingestellter Suchen auf der Grundlage der Analyse;
für mindestens eine der relevanten Ermittlungsbehörden: Generieren einer Mitteilung mit einem Link zu einem sicheren Browser, wobei der sichere Browser die bestimmte mindestens eine Suchstrategie enthält und konfiguriert ist für die Ausführung auf einer virtuellen Maschine, damit die Ermittlungsbehörde auf der Grundlage der mindestens einen Suchstrategie überprüfbare Internet-Suchen durchführen kann, die nicht mit Datenverarbeitungseinrichtungen der Ermittlungsbehörde in Verbindung gebracht werden.

2. Verfahren nach Anspruch 1, ferner umfassend das Einfügen einer sicheren URL in mindestens eine der SARs, wobei die sichere URL der Ermittlungsbehörde den Zugang zu zusätzlichen Informationen entsprechend den Fallinformationen ermöglicht.

3. Verfahren nach Anspruch 1 oder 2, wobei jedes abgerufene Datenmodell auf Berichtsspezifikationen der entsprechenden Ermittlungsbehörde basiert und wobei die Validierung ferner umfasst: das Zurücksenden einer Validierungsproblemmeldung, wenn die Validierung aufgrund fehlerhafter Informationen nicht abgeschlossen werden kann, den Empfang korrekter Informationen und den Versuch der Validierung der korrekten Informationen.

4. Verfahren nach Anspruch 2 oder 3, wobei die zusätzlichen Informationen mindestens eines der folgenden Elemente umfassen: Datenvisualisierungen, Karten, Analysewerkzeuge, Falldaten-Belegdokumente und/oder Kommunikationswerkzeuge, die es den Mitarbeitern der Ermittlungsbehörde ermöglichen, Nachrichten an den Compliance-Experten, der die SAR erstellt hat, zu senden und von diesem zu empfangen.

5. Verfahren nach einem der Ansprüche 2 bis 4, wobei jede sichere URL für die entsprechende SAR einmalig ist.

6. Verfahren nach Anspruch 5, wobei jede sichere URL über Kontrollen verfügt, die mindestens eines der folgenden Elemente umfassen: die Authentifizierung, dass der Benutzer der URL Mitarbeiter der Ermittlungsbehörde ist, eine zeitbasierte Ablauffrist und/oder Zugriffsberechtigungen nur für gewünschte IP-Adressen.

7. Verfahren nach einem der vorangehenden Ansprüche, wobei für Anfragen an die API ein Zugangstoken erforderlich und wobei das Zugangstoken zu einem vorbestimmten Zeitpunkt abläuft.

8. Computersystem, umfassend:
einen oder mehrere Hardware-Prozessoren, die durch maschinenlesbare Anweisungen konfiguriert sind zum Durchführen des Verfahrens nach einem der Ansprüche 1 bis 7.

9. Nichtflüchtiges computerlesbares Speichermedium mit darin enthaltenen Anweisungen, wobei die Anweisungen von dem einen oder den mehreren Prozessoren ausführbar sind, um das Verfahren nach einem der Ansprüche 1 bis 7 durchzuführen.

## Revendications

1. Procédé appliqué par un ordinateur pour fournir une information concernant des activités financières suspectes,
procédé consistant à :
- recevoir un jeton d'accès numérique d'une institution financière, le jeton d'accès numérique identifiant l'institution financière et comprenant un jeton identifiant,
- faire afficher une interface de programmation d'application API sur un dispositif de calcul correspondant à l'institution financière en réponse à la réception du jeton d'accès numérique,
- recevoir une information de cas par l'application API de l'institution financière, l'information de cas comprenant une information indiquant au moins un individu, une installation et une information concernant au moins une transaction financière soumises à un rapport d'activité suspecte vers une ou plusieurs agences d'investigation,
- recevoir une information supplémentaire de l'installation financière concernant l'information de cas et enregistrant cette information supplémentaire dans une base de données en correspondance avec le jeton,
- vérifier l'identité de l'institution financière en se fondant sur le jeton d'accès,
- créer un cas correspondant au jeton d'accès et à l'information de cas ;
- déterminer une ou plusieurs agences d'investigation caractéristiques pour recevoir un rapport fondé sur l'information de cas,
* pour chacune des agences d'investigation caractéristiques, récupérer un modèle de données correspondant, associé à l'agence d'investigation caractéristique, chaque modèle de données correspondant indiquant l'information demandée par l'agence d'investigation concernant un rapport d'activité suspecte SAR fondé sur l'information de cas,
* pour chacune des agences d'investigation caractéristique, valider le fait que toute information importante requise par l'agence d'investigation est incluse dans l'information de cas fondée sur le modèle de données correspondantes,
* pour chaque agence d'investigation caractéristique, déposer un rapport SAR à l'agence d'investigation, fondé sur l'information de cas en correspondance avec le jeton d'accès,
* pour chacune des agences d'investigation caractéristique, déterminer au moins une stratégie de recherche préétablie fondée sur l'information de cas par l'analyse de l'information de cas en se basant sur un schéma de juridiction de l'agence d'investigation et configurant les recherches préétablies fondées sur l'analyse, et
- pour au moins l'une des agences d'investigation caractéristique, générer un message comprenant un lien vers un navigateur sécurisé,
- le navigation sécurisé comprenant la stratégie de recherche, déterminée et configurée pour fonctionner sur une machine virtuelle pour ainsi permettre à l'agence d'investigation de faire des recherches internet vérifiables, fondées sur au moins une stratégie de recherche qui ne sera pas associée au dispositif de calcul de l'agence d'investigation.

2. Procédé selon la revendication 1,
consistant en outre à :
- inclure une adresse URL de sécurité dans au moins l'un des rapports SAR, l'adresse URL de sécurité fournissant à l'agence d'investigation, l'accès à l'information supplémentaire correspondant à l'information de cas.

3. Procédé selon la revendication 1 ou 2,
selon lequel
chaque modèle de données récupéré est fondé sur des vérifications de rapport de l'agence d'investigation correspondante et
la validation consiste en outre à retourner un message sur les problèmes de validation qui ne peuvent être terminés à cause de l'absence d'information ou d'informations erronées, la réception d'informations corrigées et la tentative de validation d'informations corrigées.

4. Procédé selon la revendication 2 ou 3,
selon lequel
l'information supplémentaire comprend au moins l'une des informations suivantes : visualisation de données, cartes, outils d'analyse, documents de support de données de cas et/ou outils de communication qui permettent au personnel de l'agence d'investigation d'envoyer et de recevoir les messages de conformité professionnelle pour qui a préparé le rapport SAR.

5. Procédé selon l'une quelconque des revendications 2 à 4,
selon lequel
chaque adresse URL sécurisée est unique pour le rapport SAR correspondant.

6. Procédé selon la revendication 5,
dans lequel
chaque adresse URL sécurisée à contrôler qui comprend au moins l'une des authentifications que l'utilisateur de l'adresse URL est une personne de l'agence d'investigation, une expiration fondée sur le temps et/ou des permissions d'accès à seulement l'adresse IP souhaitée.

7. Procédé selon l'une quelconque des revendications précédentes,
selon lequel
le jeton d'accès est nécessaire pour faire des requêtes à l'application API et le jeton d'accès expire à un instant prédéterminé.

8. Système d'ordinateur comprenant :
au moins un ou plusieurs processeurs réels configurés par des instructions lisibles par machine pour appliquer le procédé selon l'une quelconque des revendications 1 à 7.

9. Support d'enregistrement lisible par ordinateur, non volatile, ayant des instructions qui, exécutées par un ou plusieurs processeurs, appliquent le procédé selon l'une quelconque des revendications 1 à 7.
